(19) Europäisches Patentamt
European Patent Office
Office européen des brevets

(11) EP 2 821 248 B1

(12) **EUROPEAN PATENT SPECIFICATION**

(45) Date of publication and mention of the grant of the patent:
**06.02.2019 Bulletin 2019/06**

(21) Application number: **13754291.6**

(22) Date of filing: **27.02.2013**

(51) Int Cl.:
***B60C 5/01*** *(2006.01)* ***B60C 1/00*** *(2006.01)*
***B60C 9/00*** *(2006.01)* ***B60C 9/04*** *(2006.01)*
***C08J 5/06*** *(2006.01)* ***C08L 53/02*** *(2006.01)*
***C08L 77/00*** *(2006.01)*

(86) International application number:
**PCT/JP2013/055237**

(87) International publication number:
**WO 2013/129525 (06.09.2013 Gazette 2013/36)**

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.02.2012 JP 2012044594**
**29.02.2012 JP 2012044649**
**01.03.2012 JP 2012045525**

(43) Date of publication of application:
**07.01.2015 Bulletin 2015/02**

(73) Proprietor: **Bridgestone Corporation**
**Tokyo 104-8340 (JP)**

(72) Inventors:
- **HARADA, Takashi**
**Tokyo 104-8340 (JP)**
- **FUDEMOTO, Hiroyuki**
**Tokyo 104-8340 (JP)**
- **MACHIDA, Kunio**
**Tokyo 104-8340 (JP)**

(74) Representative: **Lang, Johannes et al**
**Bardehle Pagenberg Partnerschaft mbB**
**Patentanwälte, Rechtsanwälte**
**Prinzregentenplatz 7**
**81675 München (DE)**

(56) References cited:
**EP-A1- 2 676 809**
**JP-A- S5 624 149**
**JP-A- H02 141 306**
**JP-A- H10 315 709**
**JP-A- 2000 177 316**
**JP-A- 2010 059 234**
**JP-A- 2011 042 236**
**JP-A- 2012 035 500**
**JP-A- 2012 046 028**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 821 248 B1

## Description

Technical Field

The present invention relates to a tire for fitting onto a rim, and in particular relates to a tire in which at least a portion of a tire case is formed of a resin material.

Background Art

Known pneumatic tires employed in vehicles such as cars are configured from rubber, organic fiber materials, steel members, and the like.

Recently, the use of resin materials, in particular thermoplastic resins, thermoplastic elastomers, and the like, as tire materials is being investigated from the perspectives of weight reduction, ease of molding, and ease of recycling.

For example, Patent Document 1 (Japanese Patent Application Laid-Open (JP-A) No. 2003-104008) and Patent Document 2 (JP-A No. H03-143701) describe a pneumatic tire formed using a thermoplastic polymer material, which is specifically a thermoplastic polyester-based elastomer.

Tires that employ a polymer material (resin material) with thermoplastic properties are more easily manufactured and lower in cost than conventional rubber-made tires.

There is a demand to achieve performance (a demand for tire properties) that compares favorably to conventional rubber-made tires, while also achieving an increase in manufacturing efficiency at low cost when manufacturing tires using a thermoplastic polymer material.

However, when a tire is formed with only a uniform thermoplastic resin that does not incorporate a reinforcing member such as a carcass ply, as in JP-A No. 2003-104008, it is difficult to achieve a tire that withstands stress, withstands internal pressure, and exhibits rigidity equivalent to conventional rubber-made tires. However, in JP-ANo. H03-143701 a reinforcing layer, in which a reinforcing cord is wound in a continuous spiral shape along a tire circumferential direction, is provided to a tire radial direction outer surface of a tread bottom portion of a tire main body (tire frame), and cut resistance performance, and puncture resistance performance of the tire frame are improved.

Proposed technology relating to steel cords (wires) used as reinforcing layers (belt layers) includes a steel cord for a tire usable in a carcass layer, a bead reinforcing layer, and a belt layer of a radial tire (see Japanese Patent No. 4423772), and a pneumatic tire in which a steel cord, formed by a steel wire covered by a thermoplastic elastomer composition, is used as a belt layer (belt portion) or a reinforcing material of a carcass portion (see Japanese Patent No. 4465916). JP 2012 035500 A refers to a method of manufacturing a tire and the tire, wherein a tire width direction clearance L1 of a reinforcement cord in a tire width direction central part (central part) of an outer peripheral face of the tire frame member is arranged to be wider than a tire width direction clearance L2 of the reinforcement cord in tire width direction both end part (side part) of the outer peripheral face of the tire frame member.

SUMMARY OF INVENTION

Technical Problem

Generally, when using a reinforcing cord, in terms of tire performance, there is demand for sufficient fixing of the reinforcing cord to a tire frame. However, when a metal member such as a steel cord is used as a reinforcing cord, satisfactory adhesion between the reinforcing cord and the tire frame is difficult under ordinary molding conditions.

Following investigations, the present inventors have found that the durability of a tire itself can be improved by improving the adhesion durability between a tire frame and a reinforcing member such as a steel cord, so as to withstand vibrations and the like during running.

The steel cords for use in tires described in Japanese Patent No. 4423772 have a thermoplastic elastomer composition loaded into a steel structure formed by a twisted construction of a core, formed of wire, and a sheath. However, such technology is intended for installation to rubber-made radial tires, and there is no reference to a relationship between a tire employing a resin material and a reinforcing member. Moreover, in the tire described in Japanese Patent No. 4465916, there is also no reference regarding tires employing resin materials as a tire frame to raising the adhesion durability between a reinforcing member and a tire frame.

The invention provides a tire that is formed of a resin material and has excellent adhesion durability between a reinforcing cord and a tire frame.

Solution to Problem

The invention provides, as a first embodiment, a tire comprising:

a circular tire frame formed from a resin material; and
a metal reinforcing cord member wound on an outer circumference of the tire frame, at least a portion of the metal reinforcing cord member being covered by a covering mixture comprising a thermoplastic resin and a thermoplastic polyurethane-based elastomer, wherein a tensile elastic modulus (x1) of the tire frame, a tensile elastic modulus (x2) of the covering mixture, and a tensile elastic modulus (x3) of the metal reinforcing cord member satisfy the relationship x1 < x2 < x3.

The invention provides, as a second embodiment, a tire comprising:

a circular tire frame formed from a resin material; and
a metal reinforcing cord member wound on an outer circumference of the tire frame, at least a portion of the metal reinforcing cord member being covered by a covering mixture comprising a thermoplastic resin and a thermoplastic polystyrene-based elastomer, wherein a tensile elastic modulus (x1) of the tire frame, a tensile elastic modulus (x2) of the covering mixture, and a tensile elastic modulus (x3) of the metal reinforcing cord member satisfy the relationship x1 < x2 < x3.

The invention further provides, as a third embodiment, a tire comprising:

a circular tire frame formed from a resin material; and
a metal reinforcing cord member wound on an outer circumference of the tire frame, wherein
at least a portion of the metal reinforcing cord member is covered by a covering mixture comprising a thermoplastic resin and at least one thermoplastic olefin-based elastomer selected from the group consisting of an acid-modified thermoplastic olefin-based elastomer having an elastic modulus of less than 140 MPa and a non-acid-modified thermoplastic olefin-based elastomer having an elastic modulus of less than 140 MPa, wherein a tensile elastic modulus (x1) of the tire frame, a tensile elastic modulus (x2) of the covering mixture, and a tensile elastic modulus (x3) of the metal reinforcing cord member satisfy the relationship x1 < x2 < x3.

BRIEF DESCRIPTION OF DRAWINGS

Fig. 1A is a perspective view illustrating a cross-section of a portion of a tire according to an embodiment of the invention.
Fig. 1B is a cross-section of a bead portion of a tire according to an embodiment of the invention, the bead portion having been fitted onto a rim.
Fig. 2 is a cross-section taken along the tire rotation axis of a tire of a first embodiment, and illustrating a state in which reinforcing cord is embedded in a crown portion of a tire case.
Fig. 3 is an explanatory diagram to explain an operation to embed the reinforcing cord in the crown portion of a tire case using a cord heating device and rollers.
Fig. 4 is a cross-section of a tire of a second embodiment, taken along the tire rotation axis and showing a state including a reinforcing cord covering layer in which a metal reinforcing cord member has been embedded in a crown portion of a tire case of the tire.

DESCRIPTION OF EMBODIMENTS

The tire of the invention includes a circular tire frame formed from a resin material and a metal reinforcing cord member wound on an outer circumference of the tire frame, wherein at least a portion of the metal reinforcing cord member is covered by a covering mixture (referred to below as "specific covering mixture") including at least a thermoplastic resin and an elastomer (referred to below as "specific elastomer") selected from the group consisting of (1) to (3) below:

(1) a thermoplastic polyurethane-based elastomer;
(2) a thermoplastic polystyrene-based elastomer; and
(3) a thermoplastic olefin-based elastomer including at least one selected from the group consisting of an acid-modified thermoplastic olefin-based elastomer having an elastic modulus of less than 140 MPa, and a non-acid-modified thermoplastic olefin-based elastomer having an elastic modulus of less than 140 MPa; wherein a tensile elastic modulus (x1) of the tire frame, a tensile elastic modulus (x2) of the covering mixture, and a tensile elastic modulus (x3) of the metal reinforcing cord member satisfy the relationship x1 < x2 < x3.

When forming a tire employing the metal reinforcing cord member, from the viewpoint of durability of the tire, it is desirable that the metal reinforcing cord member is sufficiently fixed to the tire frame. From the viewpoint of the durability of the tire, when forming the tire it is preferable to prevent the occurrence of air remaining (bubbles) at the cord periphery, this being a cause of movement of the metal reinforcing cord member. Moreover, the material employed in the tire frame of a resin tire is preferably flexible from the viewpoint of ride quality in an automobiles and the like. However, when a rigid member such as steel cord is employed as a metal reinforcing cord member, there is a large difference between the elastic modulus of the flexible resin material and the metal reinforcing cord member (rigidity difference), making it difficult to maintain sufficient adhesion durability between the tire frame and the metal reinforcing cord member.

If a thermoplastic resin in a molten state is placed in contact with a metal surface and allowed to harden in that state, then strong adhesion to the metal surface can be achieved, enabling an increase in the pull-out resistance of the covering mixture with respect to the metal reinforcing cord member. Moreover, the presence of a covering mixture, including at least a thermoplastic resin and a specific elastomer, at the interface between the metal reinforcing cord member and the resin material forming the tire frame, enables the rigidity difference between the metal reinforcing cord member and the tire frame to be mitigated. In particular, properties of the specific covering mixture, such as flexibility (tensile elastic modulus), tensile strength, and elongation at break, can be adjusted easily by adjusting the content ratio of the thermoplastic resin and the specific elastomer, enabling the flexibility to be more easily raised than when a single thermoplastic resin is employed. Moreover, the specific covering mixture has the thermoplastic resin and the specific elastomer as main components, and so adhesiveness is also excellent with respect to the tire frame employing a resin material. Thus, covering the metal reinforcing cord member with the specific covering mixture efficiently raises the pull-out resistance of the metal reinforcing cord member and the adhesiveness to the tire frame while effectively mitigating the rigidity difference between the resin material forming the tire frame, and the metal reinforcing cord member, enabling an increase in the adhesion durability between the metal reinforcing cord member and the tire frame.

"At least a portion of the metal reinforcing cord member is covered by a covering mixture including at least a thermoplastic resin and a specific elastomer" means a state in which a portion, or all, of the surface of the metal reinforcing cord member is covered by the specific covering mixture. For example: a state in which the specific covering mixture covers a portion, or all, of the outer circumference of the metal reinforcing cord member acting as a core; or, when a reinforcing cord covering layer is configured including the specific covering mixture and provided to the outer circumference of the tire frame, a state in which a portion, or all, of the metal reinforcing cord member is embedded in the reinforcing cord covering layer.

Configuration may be made such that at least a portion of the metal reinforcing cord member is embedded in the tire frame. For example, when the specific covering mixture covers a portion, or all, of the outer circumference of the metal reinforcing cord acting as a core, the contact surface area between the tire frame and the covering mixture covering the metal reinforcing cord member can be increased if the metal reinforcing cord member is embedded in the tire frame. Therefore the adhesion durability of the metal reinforcing cord member can be further raised. In cases in which a reinforcing cord covering layer formed including the specific covering mixture is provided at the outer circumference of the tire frame, a further increase in the adhesion durability of the metal reinforcing cord member is enabled since the metal reinforcing cord member can be tightly fixed to the tire frame, and close contact and adhesion over a wide surface area can be made between the specific covering mixture, acting as the reinforcing cord covering layer, and the tire frame, by embedding the metal reinforcing cord member in the tire frame surface.

Explanation follows regarding the metal reinforcing cord member of the invention, and the covering mixture that covers the metal reinforcing cord member and includes at least the thermoplastic resin and the specific elastomer, and regarding the resin material forming the tire frame, followed by explanation regarding specific embodiments of tires of the invention, with reference to the drawings.

In the present specification, "resin" includes thermoplastic resins and thermosetting resins, but does not include natural rubber. The meaning of "thermoplastic elastomer" is a thermoplastic resin material formed of a copolymer, the copolymer including: a polymer forming a hard segment that is crystalline and has a high melting point, or a hard segment that has a high cohesive force; and a polymer forming a soft segment that is amorphous and has a low glass transition temperature. In the following explanation of resins "the same type" indicates both being ester-based, both being styrene-based, or the like.

## Metal Reinforcing Cord Member

A cord such as one made of metal and employed in conventional rubber-made tires may be applied as the metal reinforcing cord member if appropriate. Examples that may be employed as the metal reinforcing cord member include a monofilament (single strand) metal fiber, or a multifilament (twisted strands) of twisted fibers, such as a steel cord of twisted steel fibers. There is no particular limitation to the cross-sectional profile, size (diameter), or the like, of the metal reinforcing cord member, and these may be suitably selected as appropriate to the desired tire.

A single strand, or plural strands, of the metal reinforcing cord member may be wound onto the tire frame in a

circumferential direction, and may be wound in a continuous spiral shape continuous along the circumferential direction. The metal reinforcing cord member may be wound in the circumferential direction so as to be evenly spaced along the width direction of the tire frame, or may be wound so as to cross over itself.

Moreover, in order to improve adhesiveness, the metal reinforcing cord member may be subjected to surface treatment, may be activated, and may be coated with an adhesive.

The tensile elastic modulus of the metal reinforcing cord member itself (in the present specification below, "elastic modulus" means the tensile elastic modulus unless otherwise stated), is normally approximately from 100000 MPa to 300000 MPa, preferably from 120000 MPa to 270000 MPa, more preferably from 150000 MPa to 250000 MPa. Note that the tensile elastic modulus of the metal reinforcing cord member is calculated from the gradient of a stress-strain curve plotted using a ZWICK-type chuck in a tensile test machine.

The elongation at break (tensile elongation at break) of the metal reinforcing cord member itself is normally approximately from 0.1% to 15%, in preferably from 1% to 15%, and is more preferably from 1% to 10%. The tensile elongation at break of the metal reinforcing cord member is derived from the strain by plotting a stress-strain curve using ZWICK-type chuck in a tensile test machine.

Covering mixture

The covering mixture that covers the metal reinforcing cord member includes at least a thermoplastic resin and a specific elastomer. The properties of the specific covering mixture, such as the flexibility (elastic modulus), tensile strength, and elongation at break of the covering mixture, can be adjusted easily by adjusting the content ratio of the thermoplastic resin and the specific elastomer, enabling the flexibility to be raised more than when, in particular, a single thermoplastic resin is employed.

It is sufficient that at least a portion of the metal reinforcing cord member be covered by the specific covering mixture, and as stated above, in a state in which the specific covering mixture covers a portion, or all, of the outer circumference of the metal reinforcing cord member acting as a core, and, in cases in which a reinforcing cord covering layer formed including the specific covering mixture is provided at the outer circumference of the tire frame, it is sufficient that a portion, or all, of the metal reinforcing cord member be embedded in the reinforcing cord covering layer. It is preferable that all the locations at the interface between the metal reinforcing cord member and the tire frame be covered by the specific covering mixture, and more preferably the entire surface of the metal reinforcing cord member is covered by the specific covering mixture.

There are no particular limitations to the method for covering the metal reinforcing cord member with the specific covering mixture, and a known cord covering method or the like may be employed as appropriate. For example, in cases in which the covering mixture covers a portion, or all, of the outer circumference of the metal reinforcing cord member acting as a core, a method may be employed in which a steel cord is covered by molten-state thermoplastic resin using a known cross-head extruder. Moreover, when forming a reinforcing cord covering layer, a steel cord may be embedded in a molten-state reinforcing cord covering layer, or a reinforcing cord covering layer may be formed after winding a steel cord onto a tire frame. Moreover, a method in which, after a steel cord has been embedded in a molten-state reinforcing cord covering layer, a molten-state covering mixture is further layered thereon, completely embedding the steel cord in the reinforcing cord covering layer, or the like, may be employed.

From the viewpoint of effectively suppressing a rigidity difference between the tire frame and the metal reinforcing cord member, the tensile elastic modulus of the specific covering mixture itself, is preferably from 50 MPa to 2000 MPa, is more preferably from 50 MPa to 1700 MPa, and is particularly preferably from 50 MPa to 1600 MPa, as defined by JIS K7113:1995.

From the viewpoint of effectively mitigating the rigidity difference between the metal reinforcing cord member and the tire frame, the elastic modulus of the specific covering mixture itself is preferably set in an range of from 0.1 times to 20 times, more preferably set in the range of from 0.2 times to 10 times, and particularly preferably set in the range of from 0.5 times to 5 times the elastic modulus of the resin material forming the tire frame. When the elastic modulus of the specific covering mixture is 20 times the elastic modulus of the thermoplastic resin material forming the tire frame or lower, the rigidity difference is mitigated, and in addition, the crown portion does not become too hard and fittability onto a rim is easily achieved. When the elastic modulus of the covering mixture is 0.1 times the elastic modulus of the thermoplastic resin material forming the tire frame or greater, the covering mixture is not too soft, and a tire with excellent belt in-plane shear stiffness and raised cornering force is achieved.

From the viewpoint of effectively mitigating a rigidity difference between the tire frame and the metal reinforcing cord member, the elastic modulus of the specific covering mixture itself is preferably set higher than the elastic modulus of the tire frame, and lower than the elastic modulus of the metal reinforcing cord member.

The tensile elastic modulus of the specific covering mixture itself is normally approximately from 50 MPa to 2000 MPa, is preferably from 50 MPa to 1700 MPa, and is more preferably from 50 MPa to 1600 MPa, as defined by JIS K7113 (1995).

Regarding the tensile elastic modulus of the specific covering mixture itself, from the viewpoints of effectively mitigating the rigidity difference between the resin material forming the tire frame and the metal reinforcing cord member, and raising the adhesion durability, the tensile elastic modulus (x1) of the tire frame, the tensile elastic modulus (x2) of the covering mixture, and the tensile elastic modulus (x3) of the metal reinforcing cord member satisfy the relationship $x1 < x2 < x3$.

The tensile elongation at break of the specific covering mixture itself is normally approximately from 10% to 600%, is preferably from 10% to 500%, and is more preferably from 10% to 300%, as defined by JIS K7113 (1995).

Regarding the elongation at break of the specific covering mixture itself, from the viewpoints of effectively mitigating the rigidity difference between the resin material forming the tire frame and the metal reinforcing cord member, and raising the adhesion durability, the elongation at break (y1) of the tire frame, the elongation at break (y2) of the covering mixture, and the elongation at break (y3) of the metal reinforcing cord member preferably satisfy the relationship $y1 > y2 > y3$.

Thermoplastic Resin

Suitable examples that may be employed as the thermoplastic resin included in the specific covering mixture include polymers forming the hard segment of thermoplastic resins employed in the tire frame, described below. Examples of such thermoplastic resins include thermoplastic urethane-based resins, thermoplastic olefin-based resins, thermoplastic vinyl chloride-based resins, thermoplastic polyamide-based resins, thermoplastic polyester-based resins, and thermoplastic polystyrene-based resins, with thermoplastic polyamide-based resins being particularly preferable. Employing a thermoplastic polyamide-based resin as the thermoplastic resin of the specific covering mixture enables the pull-out resistance with respect to the metal reinforcing cord member to be further improved.

The thermoplastic resin material included in the covering mixture is preferably selected in consideration of the adhesiveness to the resin material employed in the tire frame. In particular, employing the same type of resin material for the resin material forming the tire frame and the thermoplastic resin included in the covering mixture enables the adhesiveness between the tire frame and the covering mixture to be further raised. Employing the same type of resin means, for example, employing a thermoplastic polyamide-based elastomer as the resin material forming the tire frame in cases in which a thermoplastic polyamide-based resins is employed as the thermoplastic resin included in the covering mixture.

The tensile elastic modulus of the thermoplastic resin included in the covering mixture itself is preferably from 50 MPa to 2000 MPa, is more preferably from 50 MPa to 1700 MPa, and is particularly preferably from 50 MPa to 1600 MPa, as defined by JIS K7113:1995.

Explanation next follows regarding examples of thermoplastic polyamide-based resins as the thermoplastic resin included in the covering mixture of the invention; however, the invention is not limited thereto.

Thermoplastic Polyamide-based Resin

Examples of the thermoplastic polyamide-based resin include polyamides that form the hard segment of the thermoplastic polyamide-based elastomers described below. Examples of the thermoplastic polyamide-based resin include polyamides (amide 6) that are ring-opened polycondensates of ε-caprolactam, polyamides (amide 11) that are ring-opened polycondensates of undecanolactam, polyamides (amide 12) that are ring-opened polycondensates of lauryl lactam, polyamides (amide 66) that are polycondensates of a diamine and a dibasic acid, and polyamides (amide MX) having meta-xylene diamine as a structural unit.

The amide 6 may be represented by, for example, $\{CO-(CH_2)_5-NH\}_n$ (where n represents the number of repeating units). The amide 11 may be represented by, for example, $\{CO-(CH_2)_{10}-NH\}_n$ (where n represents the number of repeating units). The amide 12 may be represented by, for example, $\{CO-(CH_2)_{11}-NH\}_n$ (where n represents the number of repeating units). The amide 66 may be represented by, for example, $\{CO(CH_2)_4CONH(CH_2)_6NH\}_n$ (where n represents the number of repeating units). Moreover, the amide MX having meta-xylene diamine as a structural unit may be represented by, for example, the structural unit (A-1) below (where n in (A-1) represents the number of repeating units). As the amide 6, for example, a commercial product such as "UBE NYLON" 1022B or 1011FB, manufactured by Ube Industries, Ltd., may be used. As the amide 11, "RILSAN®", manufactured by Arkema, may be used. As the amide 12, "UBESTA 3024U", "UBESTA 3020U", "UBESTA 3014U" (trade names, manufactured by Ube Industries, Ltd.) or the like may be used. As the amide 66, "UBE NYLON 2020B", "UBE NYLON 2015B" (trade names) or the like, may be used. Moreover, as the amide MX, for example, a commercial product, such as MX NYLON S6001, MX NYLON S6021, MX NYLON S6011, manufactured by Mitsubishi Gas Chemical Company, Inc., or the like may be used.

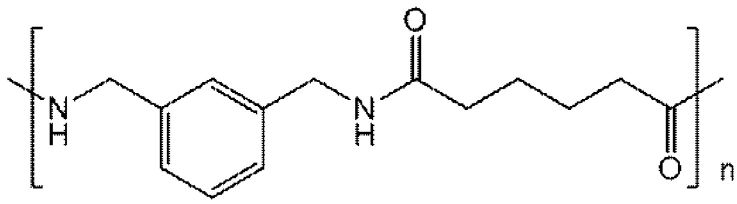

(A-1)

The thermoplastic polyamide-based resin may be a homopolymer configured by only the structural unit, or may be a copolymer of the structural unit (A-1) and another monomer. In the case of a copolymer, the content ratio of the structural unit (A-1) in each thermoplastic polyamide-based resin is preferably 40% by mass or above, and more preferably 60% by mass or above.

From the viewpoint of improving elastic modulus or the like of the covering mixture, the number average molecular weight of the thermoplastic polyamide-based resin is preferably from 300 to 30000. Moreover, from the viewpoint of toughness and flexibility at low temperature, the number average molecular weight of the polymer which forms the soft segment is preferably from 200 to 20000.

Specific Elastomer

The specific elastomer included in the specific covering mixture is selected from the group consisting of the following (1) to (3).

(1) a thermoplastic polyurethane-based elastomer
(2) a thermoplastic polystyrene-based elastomer
(3) a thermoplastic olefin-based elastomer including at least one selected from the group consisting of: an acid-modified thermoplastic olefin-based elastomer having an elastic modulus of less than 140 MPa; and a non-acid-modified thermoplastic olefin-based elastomer having an elastic modulus of less than 140 MPa.

"Thermoplastic elastomer" means a thermoplastic resin material formed by a copolymer, the copolymer including: a polymer which forms a hard segment that is crystalline and has a high melting point or a hard segment that has a high cohesive force; and a polymer which forms a soft segment that is amorphous and has a low glass transition temperature.

Thermoplastic Polyurethane-Based Elastomer

A thermoplastic resin material including a thermoplastic polyurethane-based elastomer that is the specific elastomer (1) is easy to use due to being capable of setting a melting point (softening point) thereof in the vicinity of from 85°C to 220°C. In particular, a thermoplastic polyurethane-based elastomer has high adhesiveness to the metal reinforcing cord member, and penetrates easily not only between fibers of the metal reinforcing cord member itself, but also between twisted cords when the metal reinforcing cord member is constructed from twisted fibers. The extension characteristics of thermoplastic polyurethane-based elastomer are excellent, and the break-withstanding properties are excellent. Moreover, the thermoplastic polyurethane-based elastomer often has excellent adhesiveness to other resins. Accordingly, the degree of freedom to select the resin material for forming the tire frame tends to be higher from the viewpoint of adhesiveness between the tire frame and the specific covering mixture.

Examples of the thermoplastic polyurethane-based elastomer include materials with at least a polyurethane forming the hard segment that forms pseudo-crosslinks by physical aggregation, and another polymer that forms a soft segment that is amorphous and has a low glass transition temperature, such as the thermoplastic polyurethane-based elastomer (TPU) defined by JIS K6418:2007. The thermoplastic polyurethane-based elastomer may be represented by a copolymer including a soft segment including the unit structure represented by the following Formula A and a hard segment including the unit structure represented by the following Formula B.

Formula A

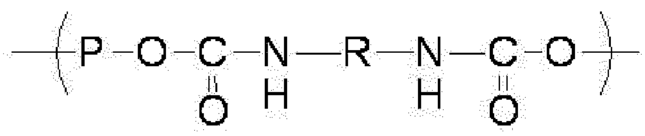

Formula B

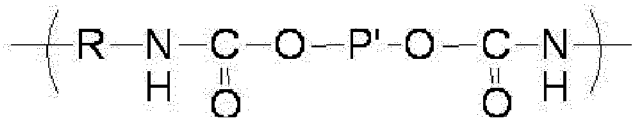

In the Formulae, P represents a long-chain aliphatic polyether, or a long-chain aliphatic polyester. R represents an aliphatic hydrocarbon, an alicyclic hydrocarbon, or an aromatic hydrocarbon. P' represents a short-chain aliphatic hydrocarbon, an alicyclic hydrocarbon, or an aromatic hydrocarbon.

In Formula A, a species with a molecular weight of from 500 to 5000, for example, may be employed as the long-chain aliphatic polyether or the long-chain aliphatic polyester represented by the P. The P is derived from a diol compound including the long-chain aliphatic polyether or the long-chain aliphatic polyester represented by the P. Examples of such diol compounds include polyethylene glycols, polypropylene glycols, polytetramethylene ether glycols, poly(butylene adipate) diols, poly-e-caprolactone diols, poly(hexamethylene carbonate) diols, and the ABA-type triblock polyethers (polyethers represented by Formula (3) above), within the molecular weight range described above.

These compounds may be employed singly, or in a combination of two or more thereof.

In Formulae A and B, the R is derived from a diisocyanate compound including the aliphatic hydrocarbon, the alicyclic hydrocarbon, or the aromatic hydrocarbon represented by the R. Examples of aliphatic diisocyanate compounds including the aliphatic hydrocarbon represented by the R include 1,2-ethylene diisocyanate, 1,3-propylene diisocyanate, 1,4-butane diisocyanate, and 1,6-hexamethylene diisocyanate.

Moreover, examples of diisocyanate compounds including the alicyclic hydrocarbon represented by the R include 1,4-cyclohexane diisocyanate, or 4,4-cyclohexane diisocyanate. Moreover, examples of aromatic diisocyanate compounds including the aromatic hydrocarbon represented by the R include 4,4'-diphenylmethane diisocyanate, or tolylene diisocyanate.

These compounds may be employed singly, or in a combination of two or more thereof.

In Formula B, a species with a molecular weight of less than 500, for example, may be employed as a short-chain aliphatic hydrocarbon, alicyclic hydrocarbon, or aromatic hydrocarbon represented by P'. Moreover, the P' is derived from a diol compound including the short-chain aliphatic hydrocarbon, alicyclic hydrocarbon, or aromatic hydrocarbon represented by the P'. Examples of aliphatic diol compounds including the short-chain aliphatic hydrocarbon represented by the P' include glycols and polyalkylene glycols, with examples thereof including ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol, and 1,10-decanediol.

Moreover, examples of alicyclic diol compounds including the alicyclic hydrocarbon represented by the P' include cyclopentane-1,2-diol, cyclohexane-1,2-diol, cyclohexane-1,3-diol, cyclohexane-1,4-diol, and cyclohexane-1,4-dimethanol.

Furthermore, examples of aromatic diol compounds including the aromatic hydrocarbon represented by the P' include hydroquinone, resorcinol, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenylether, 4,4'-dihydroxydiphenylsulfide, 4,4'-dihydroxydiphenylsulfone, 4,4'-dihydroxybenzophenone, 4,4'-dihydroxydiphenylmethane, bisphenol A, 1,1-di(4-hydroxyphenyl)cyclohexane, 1,2-bis(4-hydroxyphenoxy)ethane, 1,4-dihydroxynaphthalene, and 2,6-dihydroxynaphthalene.

These compounds may be employed singly, or in a combination of two or more thereof.

From the viewpoint of melt-molding property, the number average molecular weight of the polymer (polyurethane) forming the hard segment is preferably from 300 to 1500. Moreover, from the viewpoints of flexibility and thermal stability of the thermoplastic polyurethane-based elastomer, the number average molecular weight of the polymer which forms the soft segment is preferably from 500 to 20000, more preferably from 500 to 5000, and particularly preferably from 500 to 3000. Moreover, from the viewpoint of formability, the mass ratio (x:y) of the hard segment (x) to the soft segment (y) is preferably from 15:85 to 90:10, and more preferably from 30:70 to 90:10.

The thermoplastic polyurethane-based elastomer may be synthesized by, using a known method, subjecting a polymer which forms the hard segment and a polymer which forms the soft segment described above to copolymerization. The thermoplastic polyurethane described in JP-A H05-331256, for example, may be employed as the thermoplastic polyurethane-based elastomer.

Specifically, the thermoplastic polyurethane-based elastomer is preferably a combination of a hard segment consisting of an aromatic diol and an aromatic diisocyanate, and a soft segment consisting of a polycarbonate ester, with a tolylene diisocyanate (TDI)/polyester-based polyol copolymer, a TDI/polyether-based polyol copolymer, a TDI/caprolactone-based polyol copolymer, a TDI/polycarbonate-based polyol copolymer, a 4,4'-diphenylmethane diisocyanate (MDI)/polyester-based polyol copolymer, an MDI/polyether-based polyol copolymer, an MDI/caprolactone-based polyol copolymer, an MDI/polycarbonate-based polyol copolymer, or an MDI + hydroquinone/polyhexamethylene carbonate copolymer being preferable, and a TDI/polyester-based polyol copolymer, a TDI/polyether-based polyol copolymer, an MDI/polyester polyol copolymer, an MDI/polyether-based polyol copolymer, or an MDI + hydroquinone /polyhexamethylene carbonate copolymer being more preferable.

Moreover, examples of commercial products that may be employed as the thermoplastic polyurethane-based elastomer include the "ELASTOLLAN®" series (examples include ELASTOLLAN® ET680, ET880, ET690, and ET890) manufactured by BASF SE, the "KURAMIRON® U" series (for example, 2000 series, 3000 series, 8000 series, and 9000 series) manufactured by Kuraray Co., Ltd., and the "MIRACTRAN®" series (for example, MIRACTRAN® XN-2001, XN-2004, P390RSUP, P480RSUI, P26MRNAT, E490, E590, and P890) manufactured by Nippon Miractran Co., Ltd.

Thermoplastic Polystyrene-Based Elastomer

A thermoplastic polystyrene-based elastomer that is the specific elastomer (2) often has good adhesiveness to other resins. Accordingly, the degree of freedom to select the resin material for forming the tire frame tends to be higher from the viewpoint of adhesiveness between the tire frame and the specific covering mixture material. An acid-modified thermoplastic polystyrene-based elastomer modified by an acid group, or an unmodified thermoplastic polystyrene-based elastomer, may be employed as the thermoplastic styrene-based elastomer. An unmodified thermoplastic polystyrene-based elastomer may also be employed together with an acid-modified thermoplastic polystyrene-based elastomer. An unmodified thermoplastic polystyrene-based elastomer is a material that, in particular, has excellent pull-out resistance with respect to the metal reinforcing cord member, material flowability (handling characteristics), and adhesiveness to the tire frame. An acid-modified thermoplastic polystyrene-based elastomer is a material that, in particular, has excellent elongation at break. Moreover, employing an acid-modified thermoplastic polystyrene-based elastomer together with an unmodified thermoplastic polystyrene-based elastomer enables the adhesiveness to the tire frame, and the pull-out resistance with respect to the metal reinforcing cord member to be achieved, at the same time as excellent elongation at break characteristics.

Examples of the thermoplastic polystyrene-based elastomer include materials with at least polystyrene forming the hard segment, and with another polymer (for example polybutadiene, polyisoprene, polyethylene, hydrogenated polybutadiene, hydrogenated polyisoprene, or the like) forming the soft segment with a low glass transition temperature. Synthetic rubbers, such as vulcanized SBR resins or the like, may be used as the thermoplastic polystyrene-based elastomer.

Examples of polystyrenes that may be suitably employed for forming the hard segment include those obtained using known radical polymerization methods, or those obtained using known ionic polymerization methods, for example a polystyrene having an anionic living polymer form. Examples of polymers for forming the soft segment include polybutadiene, polyisoprene, poly(2,3-dimethyl-butadiene), and the like. The acid-modified thermoplastic polystyrene-based elastomer may be obtained by acid-modifying an unmodified thermoplastic polystyrene-based elastomer, as described below.

Respective combinations of the hard segment and the soft segment described above are examples of the above combination of the hard segment and the soft segment. Of these, a combination of polystyrene/polybutadiene, or a combination of polystyrene/polyisoprene, is preferable. Moreover, to suppress unintended crosslinking reactions of the thermoplastic elastomer, the soft segment is preferably hydrogenated.

The number average molecular weight of the polymer (polystyrene) forming the hard segment is preferably from 5000 to 500000, and preferably from 10000 to 200000.

Moreover, the number average molecular weight of the polymer which forms the soft segment is preferably from 5000 to 1000000, more preferably from 10000 to 800000, and particularly preferably from 30000 to 500000. Moreover, from the viewpoint of formability, the volume ratio (x:y) of the hard segment (x) to the soft segment (y) is preferably from 5:95 to 80:20, and still more preferably from 10:90 to 70:30.

The thermoplastic polystyrene-based elastomer may be synthesized by, using a known method, subjecting a polymer which forms the hard segment and a polymer which forms the soft segment described above to copolymerization.

Examples of the thermoplastic polystyrene-based elastomer include styrene-butadiene-based copolymers [SBS (polystyrene-poly(butylene)block-polystyrene), and SEBS (polystyrene-poly(ethylene/butylene)block-polystyrene)], styrene-isoprene copolymers [polystyrene-polyisoprene block-polystyrene)], and styrene-propylene-based copolymers [SEP (polystyrene-(ethylene/propylene)block), SEPS (polystyrene-poly(ethylene/propylene)block-polystyrene), SEEPS (polystyrene-poly(ethylene-ethylene/propylene)block-polystyrene)], and SEB (polystyrene (ethylene/butylene)block), and SEBS is particularly preferable.

Examples of commercial products that may be used as the unmodified thermoplastic polystyrene-based elastomer include those from the "TUFTEC®" series (for example, H1031, H1041, H1043, H1051, H1052, H1053, H1062, H1082, H1141, H1221, or H1272), manufactured by Asahi Kasei Corporation, SEBS (such as "HYBRAR®" 5127, or 5125), and SEPS (such as "SEPTON®" 2002, 2063, S2004, or S2006), manufactured by Kuraray Co., Ltd.

The "acid-modified thermoplastic polystyrene-based elastomer" refers to a thermoplastic polystyrene-based elastomer that is acid modified by causing an unsaturated compound having an acid group such as a carboxylic acid group, a sulfuric acid group, or a phosphoric acid group to bond with an unmodified thermoplastic polystyrene-based elastomer. The acid-modified thermoplastic polystyrene-based elastomer may be obtained by, for example, causing an unsaturated bond site of an unsaturated carboxylic acid or an unsaturated carboxylic acid anhydride to bond (for example, by graft polymerization) with a thermoplastic polystyrene-based elastomer.

From the viewpoint of suppressing degradation of the thermoplastic polyamide-based elastomer, the (unsaturated) compound having an acid group is preferably a compound having a carboxylic acid group, that is a weak acid group, and examples that may be employed therefor include acrylic acid, methacrylic acid, itaconic acid, crotonic acid, isocrotonic acid, and maleic acid.

Examples of the acid-modified thermoplastic polystyrene-based elastomer include TUFTEC® such as TUFTEC® M1943, M1911, or M1913 manufactured by Asahi Kasei Corporation, and FG19181G (trade name) manufactured by Kraton Inc.

An acid value of the acid-modified thermoplastic polystyrene-based elastomer is preferably more than 0 mg ($CH_3ONa$)/g and 20 mg ($CH_3ONa$)/g or less, more preferably more than 0 mg ($CH_3ONa$)/g and 17 mg ($CH_3ONa$)/g or less, and particularly preferably more than 0 mg ($CH_3ONa$)/g and 15 mg ($CH_3ONa$)/g or less.

Acid-Modified Thermoplastic Olefin-Based Elastomer and Non-Acid-Modified Thermoplastic Olefin-Based Elastomer

A thermoplastic olefin-based elastomer is a polymer compound having elasticity, and is a thermoplastic resin material of a copolymer including a polymer forming a hard segment that is crystalline and has a high melting point, and including a polymer forming a soft segment that is amorphous and has a low glass transition temperature, wherein the polymer which forms the hard segment is a polyolefin such as polypropylene or polyethylene.

The thermoplastic olefin-based elastomer that is the specific elastomer (3) includes at least one selected from the group consisting of an acid-modified thermoplastic olefin-based elastomer having an elastic modulus of less than 140 MPa (specific acid-modified thermoplastic olefin-based elastomer) and a non-acid-modified thermoplastic olefin-based elastomer having an elastic modulus of less than 140 MPa (specific non-acid-modified thermoplastic olefin-based elastomer).

As stated above, a non-acid-modified thermoplastic olefin-based elastomer with an elastic modulus of less than 140 MPa (sometimes referred to below as a "specific non-acid-modified thermoplastic olefin-based elastomer") has ample flexibility, and good adhesiveness to other resins, such as thermoplastic resins. The flexibility of the specific covering mixture is readily adjusted by including the specific non-acid-modified thermoplastic olefin-based elastomer in the specific covering mixture. An acid-modified thermoplastic olefin-based elastomer with an elastic modulus of less than 140 MPa (sometimes referred to below as the "specific acid-modified thermoplastic polyolefin-based elastomer"), in addition to properties of the specific non-acid-modified thermoplastic olefin-based elastomer, also has particularly excellent affinity to thermoplastic resins, and suppresses phase separation of the specific covering mixture, enabling the durability of the specific covering mixture to be raised. In particular, when the specific non-acid-modified thermoplastic polyolefin-based elastomer is employed as the specific elastomer, there is excellent affinity between the thermoplastic resin forming the specific covering mixture and the thermoplastic elastomer due to the presence of acid-modified bodies, making phase separation less liable to occur.

The elastic modulus of the specific elastomer (3) is less than 140 MPa means that the tensile elastic modulus of the specific elastomer (3) is less than 140 MPa, as defined by JIS K7113:1995.

"140 MPa", which is an elastic modulus of the thermoplastic olefin-based elastomer is a numerical value acting as a borderline that divides, from the viewpoint of elastic modulus, thermoplastic resins and the specific elastomer (3) in the specific covering mixture including the specific elastomer (3). Namely, among polymer compounds formed of the thermoplastic resin the specific elastomer (3) employed in the covering mixture, a polymer compound having an elastic modulus of 140 MPa or greater is the thermoplastic resin, and a polymer compound having an elastic modulus of less than 140 MPa is the specific elastomer (3).

From the viewpoints of the strength of the specific covering mixture and the adhesiveness between the specific covering mixture and the metal reinforcing cord member, the elastic modulus of the specific elastomer (3) is preferably 0.1 MPa or greater, but less than 140 MPa, more preferably from 1 MPa to 120 MPa, and particularly preferably from 1 MPa to 100 MPa.

The meaning of "non-acid-modified" in the non-acid-modified thermoplastic olefin-based elastomer is that the thermoplastic olefin-based elastomer has not been acid-modified.

Explanation next follows regarding the specific non-acid-modified thermoplastic olefin-based elastomer and the specific acid-modified thermoplastic olefin-based elastomer respectively.

Non-acid-modified Thermoplastic Olefin-based Elastomer having Elastic modulus of less than 140 MPa

The specific non-acid-modified thermoplastic olefin-based elastomer is a thermoplastic olefin-based elastomer which has not been acid-modified.

Examples of the thermoplastic polyolefin-based elastomer include materials with at least a polyolefin forming a hard segment that is crystalline and has a high melting point, and the polyolefin and an olefin which is different from the polyolefin forming a soft segment that is amorphous and has a low glass transition temperature. Examples of polyolefins to form the hard segment include polyethylene, polypropylene, isotactic polypropylene, and polybutene.

Examples of the polyolefin which forms the hard segment include polypropylene, isotactic polypropylene, polyethylene, and 1-butene.

Examples of the thermoplastic polyolefin-based elastomer include ethylene-propylene copolymers, propylene-1-hexene copolymers, propylene-4-methyl-1pentene copolymers, propylene-1-butene copolymers, ethylene-1-hexene copolymers, ethylene-4-methyl-pentene copolymers, ethylene-1-butene copolymers, 1-butene-1-hexene copolymers, 1-butene-4-methyl-pentene, ethylene-methacrylic acid copolymers, ethylene-methyl methacrylate copolymers, ethylene-ethyl methacrylate copolymers, ethylene-butyl methacrylate copolymers, ethylene-methyl acrylate copolymers, ethylene-ethyl acrylate copolymers, ethylene-butyl acrylate copolymers, propylene-methacrylic acid copolymers, propylene-methyl methacrylate copolymers, propylene-ethyl methacrylate copolymers, propylene-butyl methacrylate copolymers, propylene-methyl acrylate copolymers, propylene-ethyl acrylate copolymers, propylene-butyl acrylate copolymers, ethylene-acetic acid vinyl copolymers, and propylene-vinyl acetate copolymers.

Preferable examples of the thermoplastic polyolefin-based elastomer include ethylene-propylene copolymers, propylene-1-hexene copolymers, propylene-4-methyl-1-pentene copolymers, propylene-1-butene copolymers, ethylene-1-hexene copolymers, ethylene-4-methyl-pentene copolymers, ethylene-1-butene copolymers, ethylene-methacrylic acid copolymers, ethylene-methyl methacrylate copolymers, ethylene-ethyl methacrylate copolymers, ethylene-butyl methacrylate copolymers, ethylene-methyl acrylate copolymers, ethylene-ethyl acrylate copolymers, ethylene-butyl acrylate copolymers, propylene-methacrylic acid copolymers, propylene-methyl methacrylate copolymers, propylene-ethyl methacrylate copolymers, propylene-butyl methacrylate copolymers, propylene-methyl acrylate copolymers, propylene-ethyl acrylate copolymers, propylene-butyl acrylate copolymers, ethylene-vinyl acetate copolymers, and propylene-vinyl acetate copolymers, and still more preferable examples thereof include ethylene-propylene copolymers, propylene-1-butene copolymers, ethylene-1-butene copolymers, ethylene-1-hexene copolymers, and propylene-1-hexene copolymers.

A number average molecular weight of the thermoplastic olefin-based elastomer is preferably from 5,000 to 10,000,000. If the number average molecular weight of the thermoplastic polyolefin-based elastomer is 5,000 or greater, deterioration in the mechanical physical properties of the resin composite is suppressed. If 10,000,000 or lower, the resin composite is easily processed. From a similar viewpoint, the number average molecular weight of the thermoplastic olefin-based elastomer is more preferably from 7,000 to 1,000,000. The number average molecular weight of the thermoplastic olefin-based elastomer is particularly preferably from 10,000 to 1,000,000. This thereby enables further improvements to the mechanical physical properties and processability of the resin composite material.

The thermoplastic olefin-based elastomer may be synthesized by using a known method for copolymerizing a polymer which forms the hard segment and a polymer which forms the soft segment described above.

A commercial product, such as PRIME TPO (registered trademark) manufactured by Prime Polymer Co., Ltd., or TAFMER (registered trademark) manufactured by Mitsui Chemicals Inc., may be employed as thermoplastic polyolefin-based elastomer described above.

Acid-modified Thermoplastic Olefin-Based Elastomer with Elastic Modulus of Less Than 140 Mpa (Specific Acid-Modified Thermoplastic Olefin-Based Elastomer)

An acid-modified thermoplastic olefin-based elastomer (specific acid-modified thermoplastic olefin-based elastomer) refers to an acidified product from acidifying a non-acid-modified thermoplastic olefin-based elastomer with an acid group such as a carboxylic acid group, a sulfuric acid group, or a phosphoric acid group. An example of an acid-modification of a thermoplastic olefin-based elastomer is introduction of an acid group into a thermoplastic olefin-based elastomer by using a compound having an acid group. From the viewpoint of suppressing degradation of the thermoplastic olefin-based elastomer, the compound having an acid group employed to acid-modify the thermoplastic olefin-based elastomer is preferably an unsaturated compound having a carboxylic acid group, that is a weak acid group, and examples that may be employed therefor include acrylic acid, methacrylic acid, itaconic acid, crotonic acid, isocrotonic acid, and maleic acid.

As the thermoplastic olefin-based elastomer to be acid-modified, examples include the specific non-acid-modified thermoplastic olefin-based elastomers described above, and specific and preferable embodiments thereof are the same as those of the specific non-acid-modified thermoplastic olefin-based elastomer.

As the acid value of the specific acid-modified thermoplastic olefin-based elastomer, any value exceeding 0 mg ($CH_3ONa$)/g is sufficient.

The "acid value of the specific acid-modified thermoplastic olefin-based elastomer" refers to a total mass of sodium methoxide $CH_3ONa$ required to neutralize the acidified positions of the specific acid-modified thermoplastic olefin-based elastomer with respect to the total mass of the specific acid-modified thermoplastic olefin-based elastomer. In cases in which the acid-modified thermoplastic olefin-based elastomer included in the specific covering mixture is a single type, then the acid value is calculated from Calculation formula (1) below, and in cases in which there are two or more types of the specific acid-modified thermoplastic olefin-based elastomer included in the specific covering mixture, the acid value is calculated from Calculation formula (2) below. Note that acid values may be calculated similarly to the acid values of the acid-modified thermoplastic polystyrene-based elastomers.

Calculation formula (1)

[(Acid value of specific acid-modified thermoplastic olefin-based elastomer A) × (Total mass of specific acid-modified thermoplastic olefin-based elastomer A)] / (Total mass of specific acid-modified thermoplastic olefin-based elastomer A)

[(Acid value of specific acid-modified thermoplastic olefin-based elastomer A) × (Total mass of specific acid-modified thermoplastic olefin-based elastomer A) + (Acid value of specific acid-modified thermoplastic olefin-based elastomer B) × (Ttotal mass of specific acid-modified thermoplastic olefin-based elastomer B) + and so on]/ (Mass of all specific acid-modified thermoplastic olefin-based elastomers in the specific covering mixture)

Note that the acid value of the specific acid-modified thermoplastic olefin-based elastomer A in Calculation formula (1), and the acid values of the specific acid-modified thermoplastic olefin-based elastomers A, B, and so on in Calculation formula (2) are measured as the mass (mg) of sodium methoxide ($CH_3ONa$) employed for 1g of each of the specific acid-modified thermoplastic olefin-based elastomers during neutralization titration using the sodium methoxide ($CH_3ONa$).

In the following, the units of acid value of each of the specific acid-modified thermoplastic polyolefin-based elastomers are indicated as mg ($CH_3ONa$)/g.

From the viewpoint of the injection molding property of the specific covering mixture, the acid value of the specific acid-modified thermoplastic olefin-based elastomer is preferably 0.1 mg ($CH_3ONa$)/g or greater, but less than 20.0 mg ($CH_3ONa$)/g, is more preferably from 0.1 mg ($CH_3ONa$)/g to 17.0 mg ($CH_3ONa$)/g, and is still more preferably from 0.1 mg ($CH_3ONa$)/g to 15.0 mg ($CH_3ONa$)/g.

A number average molecular weight of the specific acid-modified thermoplastic polyolefin-based elastomer is preferably from 5,000 to 10,000,000. If the number average molecular weight of the specific acid-modified thermoplastic polyolefin-based elastomer is from 5,000 to 10,000,000, the elastic modulus of the specific acid-modified thermoplastic polyolefin-based elastomer readily achieves 140 MPa or greater, the specific acid-modified thermoplastic polyolefin-based elastomer has sufficient mechanical physical properties, and processability is excellent. From similar viewpoints, the number average molecular weight is more preferably from 7,000 to 1,000,000, and is particularly preferably from 10,000 to 1,000,000.

Contents of Thermoplastic Resin and Thermoplastic Elastomer in the Covering mixture

From the viewpoints of characteristics such as the tensile yield strength and elongation at break, and to raise the pull-out resistance of the metal reinforcing cord member with respect to the specific covering mixture, the specific covering mixture preferably has a sea-island structure including: a sea phase of a matrix phase including a thermoplastic resin; and an island phase that is a dispersed phase including a specific elastomer. Imparting the specific covering mixture with a sea-island structure in which the specific elastomer is dispersed in a matrix of the thermoplastic resin enables the tensile elastic modulus of the specific covering mixture, properties such as the tensile strength and elongation at break, and the pull-out resistance of the metal reinforcing cord member with respect to the specific covering mixture to be raised.

There is no particular limitation to a content of the thermoplastic resin in the specific covering mixture. For example, when forming the sea-island structure with a sea phase including the thermoplastic resin and an island phase including the specific elastomer, the content by volume of the thermoplastic resin is preferably from 51% by volume to 95% by volume, more preferably from 60% by volume to 90% by volume, and still more preferably from 60% by volume to 85% by volume with respect to the total content of the specific covering mixture. Similarly, although dependent on the specific weight of the selected thermoplastic resin, the content by mass of the thermoplastic resin is preferably from 55% by mass to 95% by mass, is more preferably from 60% by mass to 90% by mass, and is particularly preferably from 60% by mass to 85% by mass with respect to the total content of the specific covering mixture.

Similarly, there is no particular limitation to a content of the specific elastomer in the covering mixture. For example, when forming the sea-island structure with a sea phase including the thermoplastic resin and an island phase including the specific elastomer, the content by volume of the specific elastomer is preferably from 5% by volume to 49% by volume, more preferably from 10% by volume to 40% by volume, and still more preferably from 15% by volume to 40% by volume, with respect to the total content of the covering mixture. Similarly, although dependent on the specific weight of the selected thermoplastic resin, the content by mass of the thermoplastic resin is preferably from 5% by mass to 45% by mass, is more preferably from 10% by mass to 40% by mass, and is particularly preferably from 15% by mass to 40% by mass with respect to the total content of the covering mixture.

From the viewpoint of ease of forming the sea-island structure formed by a sea phase including the thermoplastic resin and an island phase including the specific elastomer, the mass ratio (p/e) of the thermoplastic resin (p) and the thermoplastic styrene-based elastomer (e) in the specific covering mixture is preferably from 95/5 to 55/45, is more preferably from 90/10 to 60/40, and is particularly preferably from 85/15 to 70/30.

In the sea-island structure, finely dispersing the island phase in the thermoplastic resin particularly raises the impact withstanding properties.

When an acid-modified thermoplastic polystyrene-based elastomer is employed as the specific elastomer (2), and when a specific acid-modified thermoplastic polyolefin-based elastomer is employed as the specific elastomer (3) in the sea-island structure, the island phase tends to be smaller as the acid value of the acid-modified specific elastomer becomes higher, and island phase tends to be larger as the acid value becomes lower. The higher the acid value of the acid-modified specific elastomer, the larger the interaction with a thermoplastic polyamide-based resin, and the melt viscosity of the resin material increases. Adjusting the acid value by employing a combination of an acid-modified elastomer and an unmodified elastomer (namely, in a case in which the specific elastomer (2) is employed, employing a combination of an acid-modified thermoplastic polystyrene-based elastomer and an unmodified thermoplastic polystyrene-based elastomer, and in a case in which the specific elastomer (3) is employed, employing a combination of the specific acid-modified thermoplastic polyolefin-based elastomer and the specific non-acid-modified thermoplastic olefin-based elastomer) enables the melt viscosity of the specific covering mixture to be suppressed from becoming too high.

Moreover, in cases employing a combination of an unmodified thermoplastic polystyrene-based elastomer (w) and an acid-modified thermoplastic polystyrene-based elastomer (z) as the thermoplastic polystyrene-based elastomer, or, in cases employing a combination of specific non-acid-modified thermoplastic olefin-based elastomer (w) and a specific acid-modified thermoplastic olefin-based elastomer (z) as the thermoplastic olefin-based elastomer, the range of the mass ratio (w/z) is preferably from 10/90 to 90/10, is more preferably from 15/85 to 85/15, and is particularly preferably from 20/80 to 80/20, from viewpoints of ease of handling and the like.

Generally, when a modified elastomer such as an acid-modified elastomer is employed, an effect is exhibited in which little specific energy is required during knead-mixing (dispersing), and high technology knead-mixing is not required. However, when the compounded amount thereof is larger, then gelling of the resin tends to occur, and defective external appearance (fisheyes) such as rough surfaces sometimes occurs during extrusion. From these viewpoints, when the acid-modified specific elastomer is employed, the content of acid-modified specific elastomer in the specific covering mixture is preferably less than 20% by mass, for example, from 5% by mass to 20% by mass.

Fine dispersion of the island phase, which includes the specific elastomer, in the sea phase, which includes the thermoplastic resin, may be observed by inspecting images obtained using a scanning electron microscope (SEM).

The size of the island phase (long axis of the island phase) including the specific elastomer is preferably approximately from 0.4 μm to 10.0 μm, more preferably approximately from 0.5 μm to 7 μm, and particularly preferably from 0.5 μm to 5 μm. The size of each phase may be measured by inspecting images obtained using an SEM.

Resin Material

Explanation follows regarding resin material for forming the tire frame. "Resin material" here refers to thermoplastic resins (thermoplastic elastomers included) and thermosetting resins, and does not include vulcanized rubber.

In the tire of the invention, the tire frame is formed of a resin material. Therefore, vulcanization processing, a necessary process in conventional rubber-made tires, is not required, and, for example, the tire frame may be formed by injection molding or the like. The manufacturing process is accordingly simplified, enabling improvements in productivity, such as a decrease in time and reduction in cost, to be achieved. Furthermore, when a resin material is employed as a tire frame, the structure of the tire can be simplified compared to conventional rubber-made tires, and as a result a reduction in weight of the tire is possible. This thereby enables an increase in the abrasion resistance and the durability of the tire to be achieved.

Examples of the thermosetting resin include phenolic resins, urea resins, melamine resins, epoxy resins, and polyamide resins. Examples of the thermoplastic resin include urethane resins, olefin resins, vinyl chloride resins, and polyamide resins.

The thermoplastic elastomer generally means a thermoplastic resin material formed of a copolymer including a polymer forming a hard segment and including a polymer forming a soft segment. Examples of the thermoplastic elastomer include thermoplastic polyamide-based elastomers (TPA), thermoplastic polyester-based elastomers (TPC), thermoplastic polyolefin-based elastomers (TPO), thermoplastic polystyrene-based elastomers (TPS), thermoplastic polyurethane-based elastomers (TPU), and thermoplastic cross-linked rubbers (TPV), as well as other thermoplastic elastomers (TPZ), as defined in JIS K6418. Note that in consideration of the elasticity required during running, the formability during manufacture, and the like, the tire frame preferably employs a thermoplastic resin as the resin material, and more preferably employs a thermoplastic elastomer.

When a thermoplastic polyamide-based resin is employed as the thermoplastic resin that covers the metal reinforcing cord member, a thermoplastic polyamide-based elastomer in particular is preferably employed.

Thermoplastic Polyamide-based Elastomer

The "thermoplastic polyamide-based elastomer" refers to a thermoplastic resin material that is formed of a copolymer having a polymer forming a hard segment that is crystalline and has a high melting point, and a polymer forming a soft segment that is amorphous and has a low glass transition temperature, wherein the polymer which forms the hard segment has amide bonds (-CONH-) in the main chain thereof. Examples of the thermoplastic polyamide-based elastomer include thermoplastic amide-based elastomers (TPA) defined by JIS K6418:2007, and polyamide-based elastomers described in JP-ANo. 2004-346273.

Examples of the thermoplastic polyamide-based elastomer include materials with at least a polyamide forming a hard segment that is crystalline and has a high melting point, and with another polymer (such as, for example, a polyester, or a polyether) that forms a soft segment that is amorphous and has a low glass transition temperature. The thermoplastic polyamide-based elastomer may also employ a chain extender, such as a dicarboxylic acid, as well as the hard segment and the soft segment. Examples of polyamides for forming the hard segment include polyamides generated from monomers represented by the following Formula (1) or Formula (2).

Formula (1): $H_2N\text{-}R^1\text{-}COOH$

In Formula (1), $R^1$ represents a hydrocarbon molecular chain having from 2 to 20 carbon atoms, or an alkylene group having from 2 to 20 carbon atoms.

Formula (2)

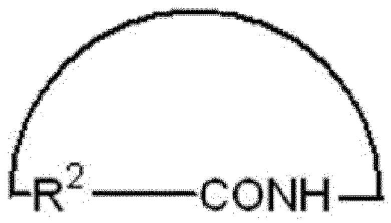

In Formula (2), $R^2$ represents a hydrocarbon molecular chain having from 3 to 20 carbon atoms, or an alkylene group having from 3 to 20 carbon atoms.

The $R^1$ in Formula (1) is preferably a hydrocarbon molecular chain having from 3 to 18 carbon atoms, or an alkylene group having from 3 to 18 carbon atoms, still more preferably a hydrocarbon molecular chain having from 4 to 15 carbon atoms, or an alkylene group having from 4 to 15 carbon atoms, and particularly preferably a hydrocarbon molecular chain having from 10 to 15 carbon atoms, or an alkylene group having from 10 to 15 carbon atoms. Moreover, the $R^2$ in Formula (2) is preferably a hydrocarbon molecular chain having from 3 to 18 carbon atoms, or an alkylene group having from 3 to 18 carbon atoms, is still more preferably a hydrocarbon molecular chain having from 4 to 15 carbon atoms, or an alkylene group having from 4 to 15 carbon atoms, and is particularly preferably a hydrocarbon molecular chain having from 10 to 15 carbon atoms, or an alkylene group having from 10 to 15 carbon atoms.

ω-aminocarboxylic acids and lactams are examples of the monomers represented by Formula (1) or Formula (2) above. Moreover, examples of the polyamide that forms the hard segment include polycondensates of such ω-aminocarboxylic acids and lactams, and copolycondensates of diamines and dicarboxylic acids.

Examples that may be employed as the ω-aminocarboxylic acid include aliphatic ω-aminocarboxylic acids having from 5 to 20 carbon atoms, such as 6-aminocaproic acid, 7-aminoheptanoic acid, 8-aminooctanoic acid, 10-aminocapric acid, 11-aminoundecanoic acid, or 12-aminododecanoic acid. Examples that may be employed as the lactam include aliphatic lactams having from 5 to 20 carbon atoms, such as lauryl lactam, ε-caprolactam, undecanolactam, ω-enantholactam, or 2-pyrrolidone.

Examples that may be employed as the diamine include diamine compounds such as aliphatic diamines having from 2 to 20 carbon atoms such as ethylene diamine, trimethylene diamine, tetramethylene diamine, hexamethylene diamine, heptamethylene diamine, octamethylene diamine, nonamethylene diamine, decamethylene diamine, undecamethylene diamine, dodecamethylene diamine, 2,2,4-trimethylhexamethylene diamine, 2,4,4-trimethylhexamethylene diamine, 3-methylpentamethylene diamine, or metaxylenediamine. Moreover, HOOC-$(R^3)_m$-COOH (wherein, $R^3$ is a hydrocarbon molecular chain having from 3 to 20 carbon atoms, and m is 0 or 1) may represent the dicarboxylic acid; for example, an aliphatic dicarboxylic acid having from 2 to 20 carbon atoms such as oxalic acid, succinic acid, glutaric acid, adipic acid, pimelic acid, suberic acid, azelaic acid, sebacic acid, or dodecanedioic acid.

A polyamide formed by ring-opened polycondensation of lauryl lactam, ε-caprolactam or undecanolactam may be preferably employed as the polyamide that forms the hard segment.

Examples of the polymer that forms the soft segment include polyesters and polyethers, with examples thereof including polyethylene glycol, polypropylene glycol, polytetramethylene ether glycol, and ABA-type triblock polyethers. These may be employed singly, or in a combination of two or more thereof. Moreover, a polyether diamine or the like, obtained via a reaction of ammonia or the like with a terminal unit of a polyether, may be employed.

Herein, "ABA-type triblock polyether" indicates a polyether represented by Formula (3) below.

Formula (3)

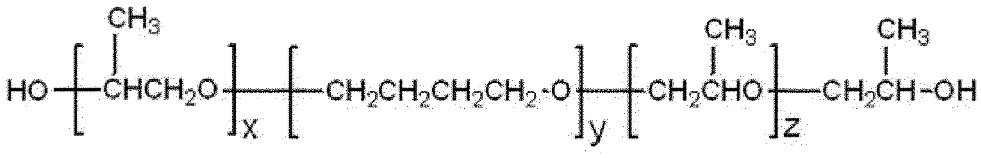

In Formula (3), x and z in Formula (3) represent integers of from 1 to 20, and y represents an integer of from 4 to 50.

As the respective values of the x and the z in Formula (3), integers of from 1 to 18 are preferable, integers of from 1 to 16 are more preferable, integers of from 1 to 14 are particularly preferable, and integers of from 1 to 12 are most preferable. Moreover, as the value of y in Formula (3), an integer of, respectively, from 5 to 45 is preferable, an integer of from 6 to 40 is more preferable, an integer of from 7 to 35 is particularly preferable, and an integer of from 8 to 30 is most preferable.

Respective combinations of the hard segments and the soft segments described above are examples of the combination of the hard segment and the soft segment. Preferable combinations from among these are a combination of a ring-opened polycondensate of lauryl lactam and polyethylene glycol, a combination of a ring-opened polycondensate of lauryl lactam and polypropylene glycol, a combination of a ring-opened polycondensate of lauryl lactam and polytetramethylene ether glycol, and a combination of a ring-opened polycondensate of lauryl lactam and an ABA-type triblock polyether. The combination of a ring-opened polycondensate of lauryl lactam and an ABA-type triblock polyether is particularly preferable.

From the viewpoint of melt-molding property, the number average molecular weight of the polymer (polyamide) forming the hard segment is preferably from 300 to 15000.

From the viewpoints of toughness and low temperature flexibility, the number average molecular weight of the polymer which forms the soft segment is preferably from 200 to 6000. From the viewpoint of formability, the mass ratio (x:y) of the hard segment (x) to the soft segment (y) is preferably from 50:50 to 90:10, and is more preferably from 50:50 to 80:20.

The thermoplastic polyamide-based elastomer may be synthesized by, using a known method, subjecting a polymer which forms the hard segment and a polymer which forms the soft segment described above to copolymerization.

Examples of commercial products employable as the thermoplastic polyamide-based elastomer include products from the "UBESTA® XPA" series (examples include UBESTA® XPA9063X1, XPA9055X1, XPA9048X2, XPA9048X1, XPA9040X1, and XPA9040X2XPA9044), manufactured by Ube Industries, Ltd., and products from the "VESTAMID®" series (for example, VESTAMID® E40-S3, E47-S1, E47-S3, E55-S1, E55-S3, EX9200, and E50-R2), manufactured by Daicel-Evonik Ltd.

A thermoplastic polyamide-based elastomer meets the performance requirements of a tire frame from viewpoints such as elastic modulus (flexibility) and strength, and so is an appropriate resin material, and often has excellent adhesiveness to thermoplastic resins. Accordingly, employing a thermoplastic polyamide-based elastomer as the resin material forming the tire frame tends to raise the degrees of freedom for selecting the material of the specific covering mixture from the viewpoint of the adhesiveness between the tire frame and the specific covering mixture.

Thermoplastic Polystyrene-based Elastomer

Examples of the thermoplastic polystyrene-based elastomer include materials with at least polystyrene forming the hard segment, and with another polymer (for example polybutadiene, polyisoprene, polyethylene, hydrogenated polybutadiene, hydrogenated polyisoprene, or the like) forming the soft segment that is amorphous and with a low glass transition temperature. Examples of polystyrenes that may be suitably employed for forming the hard segment include those obtained using known radical polymerization methods, or those obtained using known ionic polymerization methods, for example a polystyrene having an anionic living polymer form.
Examples of polymers for forming the soft segment include polybutadiene, polyisoprene, poly(2,3-dimethylbutadiene), and the like.
Respective combinations of the hard segment and the soft segment described above are examples of the above combination of the hard segment and the soft segment. Of these, a combination of polystyrene/polybutadiene, or a combination of polystyrene/polyisoprene, is preferable. Moreover, to suppress unintended crosslinking reactions of the thermoplastic elastomer, the soft segment is preferably hydrogenated.
The number average molecular weight of the polymer (polystyrene) forming the hard segment is preferably from 5000 to 500000, and preferably from 10000 to 200000.
Moreover, the number average molecular weight of the polymer which forms the soft segment is preferably from 5000 to 1000000, more preferably from 10000 to 800000, and particularly preferably from 30000 to 500000. Moreover, from the viewpoint of formability, the volume ratio (x:y) of the hard segment (x) to the soft segment (y) is preferably from 5:95 to 80:20, and still more preferably from 10:90 to 70:30.
The thermoplastic polystyrene-based elastomer may be synthesized by, using a known method, subjecting a polymer which forms the hard segment and a polymer which forms the soft segment described above to copolymerization.
Examples of the thermoplastic polystyrene-based elastomer include styrene-butadiene-based copolymers [SBS (polystyrene-poly(butylene)block-polystyrene), and SEBS (polystyrene-poly(ethylene/butylene)block-polystyrene)], styrene-isoprene copolymers [polystyrene-polyisoprene block-polystyrene)], and styrene-propylene-based copolymers [SEP (polystyrene-(ethylene/propylene)block), SEPS (polystyrene-poly(ethylene/propylene)block-polystyrene), SEEPS (polystyrene-poly(ethylene-ethylene/propylene)block-polystyrene)], and SEB (polystyrene (ethylene/butylene)block), and SEBS is particularly preferable.
Examples of commercial products that may be used as the unmodified thermoplastic polystyrene-based elastomer include those from the TUFTEC® series (for example, H1031, H1041, H1043, H1051, H1052, H1053, H1062, H1082, H1141, H1221, or H1272), manufactured by Asahi Kasei Corporation, SEBS (such as SEPTON® 8007 or 8076) and SEPS (such as SEPTON® 2002 or 2063), manufactured by Kuraray Co., Ltd.

Thermoplastic Polyurethane-Based Elastomer

Thermoplastic polyurethane-based elastomers similar to those that may be employed in the specific covering mixture may be employed as the thermoplastic polyurethane-based elastomer.

Thermoplastic Polyolefin-based Elastomer

Examples of the thermoplastic polyolefin-based elastomer include materials with at least a polyolefin forming a hard segment that is crystalline and has a high melting point, and the polyolefin and an olefin which is different from the polyolefin (such as the above-described polyolefin, other polyolefins, or polyvinyl compounds) forming a soft segment that is amorphous and has a low glass transition temperature. Examples of polyolefins to form the hard segment include polyethylene, polypropylene, isotactic polypropylene, and polybutene.
Examples of the thermoplastic polyolefin-based elastomer include olefin-$\alpha$-olefin random copolymers and olefin block copolymers, with examples thereof including propylene block copolymers, ethylene-propylene copolymers, propylene-1-hexene copolymers, propylene-4-methyl-1pentene copolymers, propylene-1-butene copolymers, ethylene-1-hexene copolymers, ethylene-4-methyl-pentene copolymers, ethylene-1-butene copolymers, 1-butene-1-hexene copolymers, 1-butene-4-methyl-pentene, ethylene-methacrylic acid copolymers, ethylene-methyl methacrylate copolymers, ethylene-ethyl methacrylate copolymers, ethylene-butyl methacrylate copolymers, ethylene-methyl acrylate copolymers, ethylene-ethyl acrylate copolymers, ethylene-butyl acrylate copolymers, propylene-methacrylic acid copolymers, propylene-methyl methacrylate copolymers, propylene-ethyl methacrylate copolymers, propylene-butyl methacrylate copolymers, propylene-methyl acrylate copolymers, propylene-ethyl acrylate copolymers, propylene-butyl acrylate copolymers, ethylene-acetic acid vinyl copolymers, and propylene-vinyl acetate copolymers.

Preferable examples of the thermoplastic polyolefin-based elastomer include propylene block copolymers, ethylene-propylene copolymers, propylene-1-hexene copolymers, propylene-4-methyl-1pentene copolymers, propylene-1-butene copolymers, ethylene-1-hexene copolymers, ethylene-4-methyl-pentene copolymers, ethylene-1-butene copolymers, ethylene-methacrylic acid copolymers, ethylene-methyl methacrylate copolymers, ethylene-ethyl methacrylate copolymers, ethylene-butyl methacrylate copolymers, ethylene-methyl acrylate copolymers, ethylene-ethyl acrylate copolymers, ethylene-butyl acrylate copolymers, propylene-methacrylic acid copolymers, propylene-methyl methacrylate copolymers, propylene-ethyl methacrylate copolymers, propylene-butyl methacrylate copolymers, propylene-methyl acrylate copolymers, propylene-ethyl acrylate copolymers, propylene-butyl acrylate copolymers, ethylene-vinyl acetate copolymers, and propylene-vinyl acetate copolymers, and still more preferable examples thereof include ethylene-propylene copolymers, propylene-1-butene copolymers, ethylene-1-butene copolymers, ethylene-methyl methacrylate copolymers, ethylene-methyl acrylate copolymers, ethylene-ethyl acrylate copolymers, and ethylene-butyl acrylate copolymers.

Moreover, two or more polyolefin resins, such as ethylene and propylene, may be used in combination. Moreover, the polyolefin content ratio in the thermoplastic polyolefin-based elastomer is preferably from 50% by mass to 100% by mass.

A number average molecular weight of the thermoplastic polyolefin-based elastomer is preferably from 5,000 to 10,000,000. If the number average molecular weight of the thermoplastic polyolefin-based elastomer is from 5,000 to 10,000,000, the thermoplastic resin material has sufficient mechanical physical properties and excellent processability. From similar viewpoints, the number average molecular weight is more preferably from 7,000 to 1,000,000, and is particularly preferably from 10,000 to 1,000,000. This thereby enables further improvements to the mechanical physical properties and processability of the thermoplastic resin material. From the viewpoints of toughness and low temperature flexibility, the number average molecular weight of the polymer which forms the soft segment is preferably from 200 to 6000. From the viewpoint of formability, the mass ratio (x:y) of the hard segment (x) to the soft segment (y) is preferably from 50:50 to 95:5, and is still more preferably from 50:50 to 90:10.

The thermoplastic polyolefin-based elastomer can be synthesized by copolymerization using a conventional method.

An acid-modified thermoplastic elastomer may be employed as the thermoplastic polyolefin-based elastomer.

The "acid-modified thermoplastic polyolefin-based elastomer" means a thermoplastic polyolefin-based elastomer that is acid modified by causing an unsaturated compound having an acid group such as a carboxylic acid group, a sulfuric acid group, or a phosphoric acid group to bond with an unmodified thermoplastic polyolefin-based elastomer. For example, when an unsaturated carboxylic acid (generally, maleic acid anhydride) is employed as the unsaturated compound having an acid group, an unsaturated bond site of the unsaturated carboxylic acid is caused to bond with (for example, by graft polymerization) a thermoplastic polyolefin-based elastomer.

From the viewpoint of suppressing degradation of the thermoplastic polyolefin-based elastomer, the compound having an acid group is preferably a compound having a carboxylic acid group that is a weak acid group, and examples that may be employed therefor include acrylic acid, methacrylic acid, itaconic acid, crotonic acid, isocrotonic acid, and maleic acid.

Examples of the thermoplastic polyolefin-based elastomer include commercial products from the TAFMER® series (for example, TAFMER® A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480, and P-0680), manufactured by Mitsui Chemicals, Inc., products from the NUCREL® series (for example, NUCREL® AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C, and N035C) and products from the ELVALOY® AC series (for example, ELVALOY® 1125AC, 1209AC, 1218AC, 1609AC, 1820AC, 1913AC, 2112AC, 2116AC, 2615AC, 2715AC, 3117AC, 3427AC, and 3717AC), manufactured by Du Pont-Mitsui Polychemicals Co., Ltd., products from the ACRYFT® series and products from the EVATATE® series, manufactured by Sumitomo Chemical Co., Ltd., and products from the ULTRA SEN® series, manufactured by Tosoh Corporation.

Moreover, commercial products employable as the thermoplastic polyolefin-based elastomer also include, for example, products from the PRIME TPO® series (examples include, PRIME TPO® E-2900H, F-3900H, E-2900, F-3900, J-5900, E-2910, F-3910, J-5910, E-2710, F-3710, J-5910, E-2740, F-3740, R110MP, R110E, T310E, and M142E), manufactured by Prime Polymer Co., Ltd.

Thermoplastic Polyester-Based Elastomer

An example of the thermoplastic polyester-based elastomer is a material including at least a polyester that

forms a hard segment that is crystalline and has a high melting point, and another polymer (for example a polyester or polyether) that forms a soft segment that is amorphous and has a low glass transition temperature.

An aromatic polyester may be employed as the polyester that forms the hard segment. The aromatic polyester may be formed of, for example, an aromatic dicarboxylic acid, or an ester-forming derivative thereof, and an aliphatic diol. The aromatic polyester is preferably polybutylene terephthalate derived from terephthalic acid and/or dimethyl terephthalate, and 1,4-butanediol. Moreover, the aromatic polyester may be a polyester derived from a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, or 5-sulfoisophthalic acid, or an ester-forming derivative thereof, and a diol with a molecular weight of 300 or less, for example: an aliphatic diol such as ethylene glycol, trimethylene glycol, pentamethylene glycol, hexamethylene glycol, neopentyl glycol, or decamethylene glycol; an alicyclic diol such as 1,4-cyclohexane dimethanol, or tricyclodecane dimethylol; or an aromatic diol such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, or 4,4'-dihydroxy-p-quaterphenyl. Moreover, the aromatic polyester may be a copolymer polyester that employs two or more of the above dicarboxylic acid components and diol components in combination. Copolymerization can also be made with a polyfunctional carboxylic acid component, a polyfunctional oxyacid component, a polyfunctional hydroxy component, or the like, having three or more functional groups, in a range of 5% by mol or less.

Examples of polyesters to form the hard segment include polyethylene terephthalate, polybutylene terephthalate, polymethylene terephthalate, polyethylene naphthalate, and polybutylene naphthalate, with polybutylene terephthalate being preferable.

Aliphatic polyesters, and aliphatic polyethers are examples of polymers to form the soft segment.

Examples of the aliphatic polyether include poly(ethylene oxide)glycol, poly(propylene oxide)glycol, poly(tetramethylene oxide)glycol, poly(hexamethylene oxide)glycol, a copolymer of ethylene oxide and propylene oxide, an ethylene oxide adduct of poly(propylene oxide)glycol, and a copolymer of ethylene oxide and tetrahydrofuran.

Examples of the aliphatic polyester include poly(ε-caprolactone), polyenantholactone, polycaprylolactone, polybutylene adipate, and polyethylene adipate.

Of these aliphatic polyethers and aliphatic polyesters, poly(tetramethylene oxide)glycol, poly(propylene oxide)glycol that is an ethylene oxide addition product, poly(ε-caprolactone), polybutylene adipate, polyethylene adipate, or the like is preferable from the viewpoint of the elasticity characteristics of the obtainable polyester block copolymer.

Moreover, from the viewpoints of toughness and flexibility at low temperature, the number average molecular weight of the polymer which forms the soft segment is preferably from 300 to 6000. Moreover, from the viewpoint of formability, the mass ratio (x:y) of the hard segment (x) to the soft segment (y) is preferably from 99:1 to 20:80, and still more preferably from 98:2 to 30:70.

Examples of the above combination of hard segment and soft segment may include respective combinations of the hard segments and the soft segments described above. Of these, a combination in which the hard segment is polybutylene terephthalate and the soft segment is an aliphatic polyether is preferable, and a combination in which the hard segment is polybutylene terephthalate and the soft segment is poly(ethylene oxide)glycol is still more preferable.

As the thermoplastic polyester-based elastomer, for example, commercial products from the HYTREL® series (such as, for example, HYTREL® 3046, 5557, 6347, 4047, 4767, and 7247), manufactured by Du Pont-Toray Co., Ltd., and from the PELPRENE® series (such as PELPRENE® P30B, P40B, P40H, P55B, P70B, P150B, P280B, P450B, P150M, S1001, S2001, S5001, S6001, and S9001), manufactured by Toyobo Co., Ltd., may be employed.

The above thermoplastic elastomer may be synthesized using a known method to copolymerize a polymer which forms the hard segment and a polymer which forms a soft segment.

The melting point of the resin material is normally approximately from 100°C to 350°C, and from the viewpoint of tire manufacturability, is preferably approximately from 100°C to 250°C, and more preferably from 100°C to 200°C.

Moreover, the durability of the tire and productivity may be improved. Various additives, such as rubbers, elastomers, thermoplastic resins, various fillers (for example, silica, calcium carbonate, or clays), anti-aging agents, oils, plasticizers, coloring agents, or weather resisting agents, may be included in (blended into) the resin material as desired.

The tensile elastic modulus of the resin material (tire frame) itself, as defined in JIS K7113:1995, is preferably from 50 MPa to 1000 MPa, is more preferably from 50 MPa to 800 MPa, and is particularly preferably from 50 MPa to 700 MPa. A tensile elastic modulus of the resin material of from 100 MPa to 1000 MPa enables the tire frame to be efficiently fitted onto a rim while maintaining the shape of the tire frame.

The tensile strength of the resin material (tire frame) itself, as defined in JIS K7113 (1995), is normally approximately from 15 MPa to 70 MPa, is preferably from 17 MPa to 60 MPa, and is more preferably from 20 MPa to 55 MPa.

The tensile yield strength of the resin material (tire frame) itself, as defined in JIS K7113:1995, is preferably 5 MPa or greater, is preferably from 5 MPa to 20 MPa, and is more preferably from 5 MPa to 17 MPa. A tensile yield strength of the resin material of 5 MPa or greater enables deformation to be withstood under load on the tire, such as during running.

The tensile yield elongation of the resin material (tire frame) itself, as defined in JIS K7113:1995, is preferably 10% or greater, is preferably from 10% to 70%, and is more preferably from 15% to 60%. A tensile yield elongation of the resin material of 10% or greater enables a large elastic region and good fittability onto a rim.

The tensile elongation at break of the resin material (tire frame) itself, as defined in JIS K7113:1995, is preferably 50% or greater, is preferably 100% or greater, is more preferably 150% or greater, and is particularly preferably 200% or greater. A tensile elongation at break of the resin material of 50% or greater enables good fittability onto a rim, and reduces the susceptibility to damage on impact.

The deflection temperature under load of the resin material (tire frame) itself, as defined in ISO75-2 or ASTM D648 (at a load of 0.45 MPa) is preferably 50°C or greater, is preferably from 50°C to 150°C, and is more preferably from 50°C to 130°C. A deflection temperature under load of the resin material of 50°C or greater enables deformation of the tire frame to be suppressed even in cases in which vulcanization is performed during tire manufacture.

First Embodiment

Explanation next follows regarding a tire according to a first embodiment of the tire of the invention, with reference to the drawings.

Explanation follows regarding a tire 10 of the present embodiment. Fig. 1A is a perspective view illustrating a cross-section of a portion of the tire according to an embodiment of the invention. Fig. 1B is a cross-section of a bead portion fitted to a rim. As illustrated in Fig. 1, the tire 10 of the present embodiment exhibits a cross-section profile that is substantially the same as an ordinary conventional rubber-made pneumatic tire. In the present embodiment, a reinforcing cord 26 is employed having a steel cord with a twisted structure employed as the metal reinforcing cord member (tensile elastic modulus: 210000 MPa, elongation at break: 8%), and this acts as a core, with the outer circumference of the core covered with a covering mixture including at least a thermoplastic resin and a specific elastomer. In the present embodiment, explanation follows regarding a specific example employing a mixture of an amide 12, as the thermoplastic polyamide-based resin, and the specific elastomer. When UBESTA3024U (trade name, manufactured by Ube Industries, Ltd.) at 80% by mass is employed as the amide 12, and ET680, a thermoplastic polyurethane-based elastomer manufactured by BASF (trade name, softening point: 107°C) at 20% by mass is employed as the specific elastomer, the obtained covering mixture has a tensile elastic modulus of 1088 MPa, an elongation at break of 335%, and a tensile strength of 47 MPa. When UBESTA3024U (trade name, manufactured by Ube Industries, Ltd.) at 70% by mass is employed as the amide 12, and TUFTEC (registered trademark) H1052 (manufactured by Asahi Kasei Chemicals Corporation, an unmodified SEBS), a thermoplastic polystyrene-based elastomer, at 30% by mass is employed as the specific elastomer, the obtained covering mixture has a tensile elastic modulus of 740 MPa, an elongation at break of 35%, and a tensile strength of 22 MPa. When a 1:1 (mass ratio) mixture of UBESTA3014U (trade name, manufactured by Ube Industries, Ltd.) and UBESTA3024U (trade name, manufactured by Ube Industries, Ltd.) at 60% by mass is employed as the amide 12, and a mixture of TAFMER (registered trademark) MH7010 (manufactured by Mitsui Chemicals, Inc.), a thermoplastic olefin-based elastomer, at 40% by mass is employed as the specific elastomer, the obtained covering mixture has a tensile elastic modulus of 600 MPa, an elongation at break of 290%, and a tensile strength of 24 MPa.

In a cross-section view taken along the axial direction of the circular tire frame (the tire case 17) of the present embodiment, the reinforcing metal cord member (namely, the reinforcing cord 26) covered by the thermoplastic resin is wound in a spiral shape with at least a portion thereof embedded in the outer circumference of the tire frame.

As illustrated in Fig. 1A, the tire 10 is equipped with a tire case 17 configured including a pair of bead portions 12 that each make contact with a bead seat 21 and a rim flange 22 of the rim 20 illustrated in Fig. 1B, side portions 14 that respectively extend from the bead portions 12 toward the tire radial direction outside, and a crown portion 16 (outer circumference) that connects together the tire radial direction outside end of one side portion 14 and the tire radial direction outside end of the other side portion 14.

The tire case 17 of the present embodiment is configured using a thermoplastic polyamide-based elastomer (for example UBESTA® XPA9055X1, manufactured by Ube Industries Ltd., tensile elastic modulus: 303 MPa, elongation at break: 350%, tensile strength: 41 MPa).

The tire case 17 of the present embodiment is formed with a single resin material (a thermoplastic polyester-based resin); however, the configuration of the invention is not limited thereto, and similarly to ordinary conventional rubber-made pneumatic tires, thermoplastic resin materials with different characteristics may be employed for each of the sections of the tire case 17 (such as the side portions 14, the crown portion 16 and the bead portions 12). The tire case 17 may be reinforced by a reinforcing material by embedding the reinforcing material (such as fibers, cord, nonwoven fabric, or cloth of a polymer material or metal) in the tire case 17 (for example, in the bead portions 12, the side portions 14, the crown portion 16, and the like).

In the tire case 17 of the present embodiment, a pair of tire case half parts (tire frame pieces) 17A formed of the resin material which includes a thermoplastic polyamide-based elastomer are bonded together. The tire case half

parts 17A are each formed as a single body of one the bead portion 12, one of the side portions 14, and half the width of the crown portion 16, by injection molding or the like, to give tire case half parts 17A of the same annular shape, that are then aligned facing each other and bonded together at tire equatorial plane portions. Note that the tire case 17 is not limited to being formed by bonding two members, and may be formed by bonding three or more members.

The tire case half parts 17A formed with the resin material may, for example, be molded by vacuum molding, pressure molding, injection molding, melt casting, or the like. The need to perform vulcanization is therefore eliminated in contrast to conventional cases in which a tire case is formed of rubber, enabling manufacturing processes to be greatly simplified, and enabling molding time to be reduced.

In the present embodiment, the tire case half parts 17A are formed in left-right symmetrical shapes, namely one of the tire case half parts 17A is formed in the same shape as the other of the tire case half parts 17A, with the advantage that one type of mold suffices for molding the tire case half parts 17A.

In the present embodiment, as illustrated in Fig. 1B, an annular bead core 18, formed of steel cord, is embedded in the bead portion 12, similarly to in ordinary conventional pneumatic tires. However, the invention is not limited to such a configuration, and the bead core 18 may be omitted as long as the rigidity of the bead portion 12 is secured, and there are no issues with fitting onto the rim 20. Other than steel cord, the bead core 18 may also be formed of, for example, organic fiber cord, organic fiber cord covered with a resin, or a hard resin.

In the present embodiment, an annular seal layer 24 formed of a material with more excellent sealing properties than the resin material forming the tire case 17, for example rubber, is formed at portions of the bead portions 12 that contact the rim 20, and at least at portions that contact the rim flanges 22 of the rim 20. The seal layer 24 may also be formed to portions where the tire case 17 (the bead portion 12) and the bead seat 21 contact each other. A softer material than the resin material forming the tire case 17 may be employed as the material with more excellent sealing properties than the resin material forming the tire case 17. As a rubber capable of being employed as the seal layer 24, preferably the same type of rubber is employed as the rubber employed on bead portion external faces of ordinary conventional rubber-made pneumatic tires. The rubber seal layer 24 may also be omitted as long as sealing properties with the rim 20 can be secured with the resin material forming the tire case 17 alone, or another thermoplastic resin (thermoplastic elastomer) with more excellent sealing properties than the resin material may also be employed. Examples of such other thermoplastic resins include resins such as polyurethane-based resins, polyolefin-based resins, thermoplastic polystyrene-based resins, and polyester resins, and blends of these resins and a rubber or elastomer, or the like. A thermoplastic elastomer may also be employed, and examples include thermoplastic polyester-based elastomers, thermoplastic polyurethane-based elastomers, thermoplastic polystyrene-based elastomers, thermoplastic polyolefin-based elastomers, combinations of such elastomers with each other, and blends of such elastomers with rubber.

As illustrated in Fig. 1A, a reinforcing cord 26, which is configured by a steel cord forming the tire case 17 and is covered by a covering mixture including at least a thermoplastic resin and a specific elastomer, is wound onto the crown portion 16 in the tire case 17 circumferential direction. The reinforcing cord 26 is wound in a spiral shape, such that at least a portion thereof is in an embedded state in the crown portion 16 in cross-section taken along the tire case 17 axial direction. A tread 30, formed of a material, for example rubber, having more excellent abrasion resistance than the resin material forming the tire case 17 is disposed to the tire radial direction outer circumferential side of the reinforcing cord 26.

Explanation next follows regarding the reinforcing cord 26, with reference to Fig. 2. Fig. 2 is a cross-section taken along the tire rotation axis and illustrating a state in which the reinforcing cord is embedded in the crown portion of the tire case of the tire of the first embodiment. As illustrated in Fig. 2, the reinforcing cord 26 is wound in a spiral shape, such that at least a portion thereof is embedded in the crown portion 16 in cross-section taken along the tire case 17 axial direction. The portion of the reinforcing cord 26 embedded in the crown portion 16 is in a close contact state with the resin material forming the crown portion 16 (the tire case 17).

As illustrated in Fig. 2, the reinforcing cord 26 has a structure in which a specific covering mixture 28, including at least a thermoplastic resin and the specific elastomer, covers a steel cord 27 of twisted steel fibers acting as the core. There are no particular limitations to the layer thickness of the specific covering mixture 28 that covers the steel cord 27, and the average layer thickness is preferably from 0.2 mm to 4.0 mm, is more preferably from 0.5 mm to 3.0 mm, and is particularly preferably from 0.5 mm to 2.0 mm. As stated above, the elastic modulus of the specific covering mixture 28 is preferably set in the range of from 0.1 times to 20 times the elastic modulus of the resin material forming the tire case 17.

The depth L of embedding in Fig. 2 illustrates a depth of embedding of the reinforcing cord 26 with respect to the tire case 17 (the crown portion 16) along the tire rotation axis direction. The depth L of embedding of the reinforcing cord 26 with respect to the crown portion 16 is preferably 1/5 of the diameter D of the reinforcing cord 26, or greater, and more preferably exceeds 1/2 thereof. It is most preferable for the whole of the reinforcing cord 26 to be embedded in the crown portion 16. From a dimensional perspective of the reinforcing cord 26, if the depth L of embedding of the reinforcing cord 26 exceeds 1/2 the diameter D of the reinforcing cord 26 it is difficult for the reinforcing cord 26 to come away from the embedded portion. Embedding the whole of the reinforcing cord 26 in the crown portion 16 gives a flat

surface (outer circumferential surface), and enables air to be suppressed from being incorporated at a reinforcing cord circumferential portion even when a member is placed on the crown portion 16 embedded with the reinforcing cord 26.

As described above, the tread 30 is disposed at the tire radial direction outer circumferential side of the reinforcing cord 26. The rubber employed in the tread 30 is preferably the same type of rubber to the rubber employed in a conventional rubber-made pneumatic tire. Note that in place of the tread 30, a tread formed of another type of thermoplastic resin material with more excellent abrasion resistance than the resin material forming the tire case 17 may be employed. A tread pattern of plural grooves is formed in the road surface contact face of the tread 30, similarly to in a conventional rubber-made pneumatic tire.

Explanation follows regarding a manufacturing method of a tire according to the present embodiment.

Tire Case Molding Process

First, tire case half parts supported by a thin metal support ring are aligned facing each other. Then placement is made in a jointing mold, not illustrated in the drawings, such that outer circumferential surfaces of the abutting portions of the tire case half parts make contact. The jointing mold is configured to press the periphery of the bonding section (the abutting portion) of the tire case half parts A with a specific pressure. Then the periphery of the bonding section of the tire case half parts is pressed at the melting point (or softening point) of the resin material forming the tire case or higher. The bonding section of the tire case half parts is heated and pressed by the jointing mold, melting the bonding section, welding the tire case half parts together, and forming these members into a single body of the tire case 17. Note that although in the present embodiment the bonding section of the tire case half parts is heated by using the jointing mold, the invention is not limited thereto, and, for example, the bonding sections may be heated by a separately provided high frequency heater, or the like, or may be pre-softened or melted by using hot air, irradiation with infrared radiation, or the like, and then pressed by the jointing mold. The tire case half parts may thus be bonded together.

Reinforcing Cord Member Winding Process

Explanation next follows regarding a reinforcing cord winding process, with reference to Fig. 3. Fig. 3 is an explanatory diagram to explain an operation to embed the reinforcing cord in the crown portion of a tire case, using a cord heating device and rollers. In Fig. 3, a cord feeding apparatus 56 is equipped with: a reel 58 wound with reinforcing cord 26; a cord heating device 59 disposed at the cord conveying direction downstream side of the reel 58; a first roller 60 disposed at the reinforcing cord 26 conveying direction downstream side; a first cylinder device 62 to move the first roller 60 in a direction towards, or away from, the tire outer circumferential surface; a second roller 64 disposed at the reinforcing cord 26 conveying direction downstream side of the first roller 60; and a second cylinder device 66 to move the second roller 64 in a direction towards, or away from, the tire outer circumferential surface. The second roller 64 may be employed as a cooling roller made of metal. In the present embodiment, the surface of the first roller 60 or the second roller 64 is coated with a fluorine resin (TEFLON (registered trademark) in the present embodiment) to suppress adhesion of the melted or softened resin material. Note that in the present embodiment, the cord feeding apparatus 56 is configured with the two rollers, the first roller 60 or the second roller 64; however, the invention is not limited to such a configuration, and may be configured with one of the rollers alone (namely, a single roller). The cord member 26 which is wound around the reel 58 is one that is configured by the steel cord 27 and the specific covering mixture 28 which covers the steel cord 27.

The cord heating device 59 is equipped with a heater 70 and a fan 72 for generating hot air. The cord heating device 59 is also equipped with a heating box 74 that is supplied inside with hot air and through an interior space of which the reinforcing cord 26 passes, and a discharge outlet 76 that dispenses the heated reinforcing cord 26.

In the present process, first, the temperature of the heater 70 is raised in the cord heating device 59, and the surrounding air heated by the heater 70 is formed into an airflow by rotation of the fan 72 and delivered into the heating box 74. The reinforcing cord 26 unwound from the reel 58 is then fed into the heating box 74, of which the internal space has been heated by the hot airflow, and heated. The heated reinforcing cord 26 passes through the discharge outlet 76, and is wound under a constant tension in a spiral shape on the outer circumferential surface of the crown portion 16 of the tire case 17 rotating in the arrow R direction in Fig. 3. When the heated reinforcing cord 26 contacts the outer circumferential surface of the crown portion 16, the resin material of the contact portion melts or softens, and at least a portion of the heated reinforcing cord 26 is embedded in the outer circumferential surface of the crown portion 16. When this is performed, due to the heated reinforcing cord 26 being embedded in the melted or softened resin material, a state is achieved in which there are no gaps between the resin material and the reinforcing cord 26, namely a close contact state. Incorporation of air into the portion where the reinforcing cord 26 is embedded is thereby suppressed. This thereby enables the reinforcing cord 26 to be readily embedded in the outer circumferential surface of the crown portion 16, and enables the incorporation of air to be effectively suppressed. Note that the adhesiveness (bondability) of the specific elastomer to the covered cord member 26B is extremely high.

The depth L of embedding of the reinforcing cord 26 can be adjusted using the heating temperature of the reinforcing cord 26, the tension acting on the reinforcing cord 26, the pressure of the first roller 60, and the like. In the present embodiment, the depth L of embedding of the reinforcing cord 26 is set to be 1/5 of the diameter D of the reinforcing cord 26 or greater. The depth L of embedding of the reinforcing cord 26 more preferably exceeds 1/2 the diameter D of the reinforcing cord 26, and most preferably the whole of the reinforcing cord 26 is embedded.
Then the vulcanized, belt-shaped, tread 30 is wound a single turn around the outer circumferential surface of the tire case 17, and the tread 30 is bonded to the outer circumferential surface of the tire case 17, with an adhesive or the like. Note that the tread 30 may, for example, employ a pre-cured tread employed in conventional known recycled tires. The present process is similar to the process for bonding a pre-cured tread to the outer circumferential surface of a casing of a recycled tire.
Bonding the seal layers 24, formed of a vulcanized rubber, to the bead portions 12 of the tire case 17 with an adhesive or the like thereby completes the tire 10.

Effects

In the tire 10 of the present embodiment, the reinforcing cord 26, having the steel cord 27 as the core and covered with the specific covering mixture 28, is wound onto the outer circumferential surface of the tire case 17 formed of the thermoplastic polyamide-based elastomer. The specific covering mixture 28 including the specific elastomer has high adhesiveness to the thermoplastic polyamide-based resin elastomer forming the tire case 17, and has a lower rigidity difference to the thermoplastic polyamide-based elastomer than the steel cord. Due to the reinforcing cord 26 being covered in this manner with the specific covering mixture that includes the thermoplastic polyamide-based resin and the specific elastomer, a smaller difference in hardness between the tire case 17 and the reinforcing cord 16 can be achieved than in cases in which the steel cord 27 is simply fixed by a cushion rubber. Thus sufficient adhesion and fixing can be achieved of the reinforcing cord 26, having the steel cord 27 as the core, to the tire case 17. Moreover, the specific covering mixture 28 has excellent pull-out resistance with respect to the steel cord 27, and good adhesiveness to the tire case 17. Due to thereby being able to effectively prevent air bubbles from remaining during tire manufacture, movement of the metal reinforcing cord member can be effectively prevented during running. Moreover, the covering mixture that includes the thermoplastic polyamide-based resin and the specific elastomer is more easily imparted with flexibility than cases in which a single thermoplastic polyamide-based resin is employed alone. The desired flexibility can accordingly be achieved with a smaller covering amount than when a single thermoplastic polyamide-based resin is employed alone.
In the tire 10 of the present embodiment, the puncture resistance performance, cut resistance performance, and the circumferential direction rigidity of the tire 10 are improved due to winding the reinforcing cord 26, that has a higher rigidity than the resin material, onto the outer circumferential surface of the crown portion 16 of the tire case 17 formed of the resin material, so as to give a spiral shape around the circumferential direction. Raising the circumferential direction rigidity of the tire 10 prevents creep of the tire case 17 formed of the resin material.
Due to at least a portion of the reinforcing cord 26 being embedded in and in close contact with the resin material in the outer circumferential surface of the crown portion 16 of the resin material-formed tire case 17 in a cross-section taken along the axial direction of the tire case 17 (the cross-section illustrated in Fig. 1), incorporation of air during manufacture is suppressed, and the reinforcing cord 26 is suppressed from moving under force input during running, or the like. Separation or the like of the reinforcing cord 26, the tire case 17, and the tread 30 is thereby suppressed from occurring, improving the durability of the tire 10.
As illustrated in Fig. 2, the depth L of embedding of the reinforcing cord 26 is 1/5 of the diameter D or greater, and so the incorporation of air during manufacture is effectively suppressed, further suppressing the reinforcing cord 26 from moving under force input during running, or the like.
Moreover, the annular bead cores 18 formed of a metal material are embedded in the bead portions 12, and so similarly to with a conventional rubber-made pneumatic tire, the tire case 17, namely the tire 10, is firmly retained on the rim 20.
The above embodiment of the tire is configured by heating the reinforcing cord 26, with the surface of the tire case 17 melting or softening at the portions where the heated reinforcing cord 26 makes contact; however, the invention is not limited to such a configuration, and the reinforcing cord 26 may be embedded in the crown portion 16 after heating, by using a hot airflow generation device, the outer circumferential surface of the crown portion 16 where the reinforcing cord 26 is to be embedded, without heating the reinforcing cord 26.
In the first embodiment of the tire, the heat source of the cord heating device 59 is a heater and a fan; however, the invention is not limited to such a configuration, and configuration may be made to directly heat the reinforcing cord 26 with radiation heat (such as, for example, by infrared radiation).
The first embodiment is configured such that the melted or softened portion of the resin material where the reinforcing cord 26 is embedded is force-cooled with the metal second roller 64; however, the invention is not limited to

such a configuration, and configuration may be made such that a cooling airflow is blown directly onto the melted or softened portion of the resin material, thereby force-cooling and solidifying the melted or softened portion of the resin material.

Winding the reinforcing cord 26 in a spiral shape facilitates manufacture; however, other methods, such as reinforcing cord 26 that is discontinuous in the width direction may also be considered.

In the tire 10 of the first embodiment, the bead portions 12 are fitted to the rim 20 so as to form an air chamber between the tire 10 and the rim 20, in what is referred to as a tubeless tire; however, the invention is not limited to such a configuration, and may be formed into a complete tube shape.

Second Embodiment

Explanation next follows regarding a second embodiment of the tire of the invention, with reference to the drawings. Fig. 4 is a cross-section of a tire of the second embodiment, taken along the tire rotation axis and showing the embodiment including a reinforcing cord covering layer in which a metal reinforcing cord member has been embedded in a crown portion of a tire case of the tire. As illustrated in Fig. 4, in the tire of the present embodiment has a reinforcing cord covering layer 29 in which the steel cord 27 (metal reinforcing cord member) is embedded in the surface of the crown portion 16 of the tire case, with a tread 30 placed over the reinforcing cord covering layer 29. The tire according to the second embodiment has a similar configuration to that of the first embodiment, except in the above point, and the same reference numerals are appended to similar configuration to that of the first embodiment.

The tire of the second embodiment has the tire case 17 and the steel cord 27, and, similarly to the first embodiment, is configured employing a thermoplastic polyamide-based elastomer.

The tire of the present embodiment is, as illustrated in Fig. 4, provided with the reinforcing cord covering layer 29, having the embedded steel cord 27 wound onto the crown portion 16 in the circumferential direction of the tire case 17. A portion of the steel cord 27 is embedded into the surface of the crown portion 16 of the tire case 17. The reinforcing cord covering layer 29 is configured with a covering mixture that includes at least a thermoplastic resin and a specific elastomer (a covering mixture similar to that of the first embodiment). There are no particular limitations to the layer thickness of the reinforcing cord covering layer 29, and, in consideration of durability and the adhesiveness to the tire case 17 and the tread 30, the average layer thickness is preferably from 0.2 mm to 4.0 mm, is more preferably from 0.5 mm to 3.0 mm, and is particularly preferably from 0.5 mm to 2.0 mm.

The elastic modulus of the reinforcing cord covering layer 29 is preferably set within a range that is higher than the elastic modulus of the resin material forming the tire case 17 and lower than the elastic modulus of the steel cord 27. Cases in which the elastic modulus of the reinforcing cord covering layer 29 is 20 times the elastic modulus of the thermoplastic resin material forming the tire case 17 or lower have a crown portion that is not too hard, and make fittability of the tire onto a rim easy.

Explanation next follows regarding a manufacturing method of a tire of the present embodiment.

Frame Forming Process

First, similarly to the tire of the first embodiment, tire case half parts 17A are formed, and the tire case 17 is formed by heating and pressing the tire case half parts 17A in a jointing mold.

Metal Reinforcing Cord Member Winding Process

In a manufacturing apparatus of the tire of the present embodiment, similarly to in the first embodiment, in the cord feeding apparatus 56 illustrated in Fig. 3 regarding the first embodiment, the steel cord 27 wound on a reel 58 is prepared. Then the steel cord 27 wound on the reel 58 is, similarly to in the first embodiment, wound along the outer circumferential surface of the tire case 17 while embedding a portion thereof in the outer circumferential surface. In the present embodiment, the surface of the steel cord 27 is covered by the covering mixture that at least includes a thermoplastic resin and the specific elastomer by embedding the steel cord 27 in the layer formed by the reinforcing cord covering layer 29. A depth L of embedding in the tire case 17 with respect to a diameter $D_2$ of the steel cord 27 is preferably set at 1/5 of a diameter $D_1$ of the steel cord 27 or less.

Layering Process

Next, the specific covering mixture is coated onto the outer circumferential surface of the tire case 17, in which the steel cord 27 embedded, using a melt-extruder or the like, not illustrated in the drawings, to form the reinforcing cord covering layer 29.

One wrap of the non-vulcanized state cushion rubber 29 is then wrapped onto the reinforcing cord covering

layer 29, and then an adhesive such as a rubber cement composition is coated onto the cushion rubber 29, and one wrap of the tread rubber 30A, in a vulcanized or semi-vulcanized state, is wrapped thereon to give a raw tire case state.

Then the vulcanized, belt-shaped, tread 30 is wound a single turn around the outer circumferential surface of the tire case 17, and the tread 30 is bonded to the outer circumferential surface of the tire case 17, with an adhesive or the like. Note that the tread 30 may, for example, employ a pre-cured tread employed in conventional known recycled tires. The present process is similar to the process for bonding a pre-cured tread to the outer circumferential surface of a casing of a recycled tire.

Bonding the seal layers 24, formed of a vulcanized rubber, to the bead portions 12 of the tire case 17 with an adhesive or the like thereby completes the tire 10.

Effect

According to the present embodiment, in addition to the effects of the first embodiment, providing the reinforcing cord covering layer 29 on the outer circumferential surface of the tire case 17 enables the steel cord 27 to be even more firmly fixed onto the tire case 17.

The second embodiment is configured with the steel cord 27 wound in a spiral shape onto the crown portion 16; however, the invention is not limited thereto, and the steel cord 27 may be wound so as to be discontinuous in the width direction.

Although embodiments have been explained above as embodiments of the invention, these embodiments are merely examples, and various modifications may be implemented within a range not departing from the spirit of the invention. Obviously the scope of rights of the invention is not limited to these embodiments.

EXAMPLES

More specific explanation regarding the invention is given below based on Examples.

Evaluation of Elongation at Break, Tensile Elastic Modulus, and Tensile Strength

The components of resins (covering mixtures included) listed in Table 1 were mixed (on a mass basis) and kneaded using a biaxial extruder LABO PLASTOMILL 50MR (trade name), manufactured by Toyo Seiki Seisaku-sho, Ltd., and pellets obtained.

The obtained pellets were pressed by a heat press at 200°C, and the resultant was subjected to trimming to manufacture samples having a size of 120 mm × 120 mm and a thickness of 2.0 mm.

Each of the samples was subjected to die-cutting to prepare dumbbell-shaped test samples (Number 5 test samples) as defined in JIS K6251:1993.

Then, using a precision universal tester SHIMADZU AUTOGRAPH AGS-J (trade name, load: 5 KN) manufactured by Shimadzu Corporation, the tensile elastic modulus, the elongation at break, and the tensile strength of each of the dumbbell-shaped test samples were measured at an elongation rate of 200 mm/min. The results are shown in each of the following Tables.

Heat Fusion Separation Strength

The resins (covering mixtures) listed in Table 1 and Table 2 were pressed using a heat press at 200°C and trimmed to prepare a sheet A having a thickness of 2.5 mm. Then, a sheet having a thickness of 4.5 mm was produced by adhering the obtained sheet A to a thermoplastic polyamide-based elastomer employed in a tire frame (UBESTA (registered trademark) XPA9055X1, manufactured by Ube Industries Ltd. (tensile elastic modulus 303 MPa, elongation at break 350%, tensile strength 41 MPa)) by heat fusing. The sheet was cut into widths of 25 mm to produce sample pieces having a size of 130 mm × 25 mm × 4 mm. The heat fusion separation strength of the produced sample pieces was determined by T-type (180°) separation tensile testing using a SHIMADZU AUTOGRAPH AGS-J (trade name, load: 5 KN) manufactured by Shimadzu Corporation, at a temperature of 23°C, and an elongation rate of 50 mm/min. The testing was performed 2 times, and the average value thereof was employed as the evaluation value. Larger evaluation values indicate more excellent adhesiveness between the covering mixture and the tire frame. The results are shown in the following Tables.

Flowability Evaluation (MFR (g/10 minutes, 200°C)

For each of the above types of pellet, the flowability (MFR: units g/10 minutes) was measured under a load of 98.07 N according to ASTM A1238 (method B) by using a semi-automatic melt indexer MODEL 2A (trade name),

manufactured by Toyo Seiki Seisaku-sho, Ltd. Larger numerical values of the measured value indicate more excellent ease-of-handling of the covering mixture. The results are shown in the following Tables.

Pull-out Test

First a monofilament having a diameter of 0.8 mm was set at the center of a circular column shaped mold having a diameter of 10 mm and a length of 60 mm.

Then the cavity portion of the circular column shaped mold was loaded with each of the resins (covering mixtures) listed in following Tables 1 and 2, and injection molding was performed. The obtained resin was cooled, and circular column shaped test samples obtained in which a brass plated wire is set at the center of a resin portion.

For each of the obtained test samples, using an AG-5KNK (trade name) manufactured by Shimadzu Corporation, the wire was pulled from the resin portion at a rate of 50 mm/min, and the pull-out force (units: N) therefor was measured during pull-out. Based on the measured values, the pull-out resistance of each of the test samples was evaluated according to the following criteria. Larger pull-out force indicates more excellent pull-out resistance of the metal reinforcing cord member.

Table 1

| | | Comp. Ex. 1-1 | Ex. 1-1 | Ex. 1-2 | Ex. 1-3 | Ex. 1-4 |
|---|---|---|---|---|---|---|
| Thermoplastic Resin (Parts by Mass) | Amide 12 | 40 | 80 | 60 | 60 | 60 |
| Thermoplastic Urethane-Based Elastomer (Parts by Mass) | Product Name | - | ET680 | ET680 | ET690 | ET890 |
| | Type of Urethane | - | Ester | Ester | Ester | Ether |
| | Content (Parts by Mass) | - | 20 | 40 | 40 | 40 |
| Rubber Component (Elastomer) | | 60 | - | - | - | - |
| Property of Covering mixture | Tensile Strength (MPa) | 12 | 47 | 38 | 26 | 25 |
| | Elongation at Break (%) | <20 | 335 | 345 | 25 | 55 |
| | Tensile Elastic Modulus (MPa) | 453 | 1088 | 752 | 761 | 680 |
| | Heat Fusion Separation Strength (Adhesiveness) (N) | 123 | 600 | 395 | 676 | 167 |
| | MFR (g/10 min) | 0.14 | 13.54 | 32.78 | 36.24 | 34.96 |
| | Pull-Out Test (N) | 16.41 | 217.1 | 626.22 | 53.69 | 52.58 |

Table 2

| | | Comp. Ex. 2-1 | Ex. 2-1 | Ex. 2-2 | Ex. 2-3 | Ex. 2-4 | Ex. 2-5 |
|---|---|---|---|---|---|---|---|
| Thermoplastic Resin (Parts by Mass) | Amide 12 | 40 | 70 | 70 | 60 | 60 | 70 |
| Thermoplastic Styrene-Based Elastomer (Parts by Mass) | Unmodified SEBS1 | - | 30 | 15 | 25 | 20 | - |
| | Acid-modified SEBS | - | - | 15 | 15 | 20 | 30 |
| | Acid Value (mg $CH_3ONa$/g) | - | 0 | 1.5 | 1.5 | 2.0 | 3.0 |
| Rubber Component (Elastomer) | | 60 | - | - | - | - | - |

(continued)

| | | Comp. Ex. 2-1 | Ex. 2-1 | Ex. 2-2 | Ex. 2-3 | Ex. 2-4 | Ex. 2-5 |
|---|---|---|---|---|---|---|---|
| Property of Covering mixture | Tensile Strength (MPa) | 12 | 22 | 24 | 16 | 16 | 26 |
| | Elongation at Break (%) | <20 | 35 | 145 | 180 | 170 | 150 |
| | Tensile Elastic Modulus (MPa) | 453 | 740 | 696 | 162 | 165 | 684 |
| | Heat Fusion Separation Strength (Adhesiveness) (N) | 123 | 262 | 249 | 273 | 244 | 151 |
| | MFR (q/10 min) | 0.14 | 63.87 | 1.19 | 3.61 | 3.20 | 0.89 |
| | Pull-Out Test (N) | 16.41 | 541.8 | 341.30 | 521.7 | 557.8 | 286.2 |

Table 3

| | | Comp. Ex. 3-1 | Ex. 3-1 | Ex. 3-2 | Ex. 3-3 | Ex. 3-4 | Ex. 3-5 | Ex. 3-6 | Ex. 3-7 | Ex. 3-8 | Ex. 3-9 |
|---|---|---|---|---|---|---|---|---|---|---|---|
| Thermoplastic Resin (Parts by Mass) | Nylon 12 | 40 | 60 | 60 | 60 | 60 | 60 | 80 | 60 | 60 | 60 |
| Thermoplastic Olefin-Based Elastomer (Parts by Mass) | TAFMER MH7007 | - | - | 40 | - | - | - | - | - | - | - |
| | TAFMER MA8510 | - | - | - | 40 | - | - | - | - | - | - |
| | TAFMER MH7010 | - | - | - | - | 40 | - | 20 | 10 | 20 | 30 |
| | TAFMER MH7020 | - | - | - | - | - | 40 | - | - | - | - |
| Acid Value of Acid-Modified Thermoplastic Olefin-Based Elastomer (mg $CH_3ONa$/g) | | - | - | 1.04 | 1.48 | 1.48 | 2.96 | 0.74 | 0.37 | 0.74 | 1.11 |
| Non-Acid-Modified Thermoplastic Olefin-Based Elastomer (Parts by Mass) | TAFMERA1050S | - | 40 | - | - | - | - | - | 30 | 20 | 10 |
| Other Components | Rubber Component (Parts by Mass) | 60 | - | - | - | - | - | - | - | - | - |
| Property of Covering mixture | Tensile Strength (MPa) | 11 | 18 | 26 | 23 | 24 | 25 | 45 | 20 | 16 | 22 |
| | Elongation at Break (%) | 15 | 50 | 300 | 50 | 290 | 320 | 345 | 180 | 70 | 295 |
| | Tensile Elastic Modulus (MPa) | 419 | 642 | 640 | 571 | 600 | 637 | 961 | 590 | 488 | 630 |
| | Heat Fusion Separation Strength (Adhesiveness) (N) | 195 | 350 | 788 | 400 | 580 | 643 | 650 | 425 | 605 | 545 |
| | MFR (g/10 min) | 3.519 | 49.68 | 10.86 | 6.021 | 5.35 | 4.53 | 25.85 | 16.00 | 11.50 | 6.99 |
| | Pull-Out Test (N) | 19.99 | 108.1 | 207.89 | 104.7 | 75.1 | 90.43 | 652.1 | 102.3 | 87.29 | 84.49 |

- Amide 12: UBESTA® 3024U, manufactured by Ube Industries Ltd.
- ET680: thermoplastic polyurethane-based elastomer (ELASTOLLAN ET680 (ester-based), manufactured by BASF)
- ET690: thermoplastic polyurethane-based elastomer (ELASTOLLAN ET690 (ester-based), manufactured by BASF)
- ET890: thermoplastic polyurethane-based elastomer (ELASTOLLAN ET890 (ether-based), manufactured by BASF)
- Unmodified SEBS : thermoplastic polystyrene-based elastomer (TUFTEC® H1052, manufactured by Asahi Kasei Chemicals Corporation, styrene content: 20% by mass)
- Acid-modified SEBS : thermoplastic polystyrene-based elastomer (TUFTEC® M1943, manufactured by Asahi Kasei Chemicals Corporation, styrene content: 20% by mass)
- Nylon 12 (thermoplastic resin) (1:1 (mass ratio)-mixture of UBESTA® 3014U and UBESTA® 3024U, manufactured by Ube Industries Ltd.)
- TAFMER MH 7007: specific acid-modified thermoplastic olefin-based elastomer (TAFMER® MH 7007, manufactured by Mitsui Chemicals, Inc.)
- TAFMER MH 7010: specific acid-modified thermoplastic olefin-based elastomer (TAFMER® MH 7010, manufactured by Mitsui Chemicals, Inc.)
- TAFMER MH 7020: specific acid-modified thermoplastic olefin-based elastomer (TAFMER® MH 7020, manufactured by Mitsui Chemicals, Inc.)
- TAFMER MA 8510: specific acid-modified thermoplastic olefin-based elastomer (TAFMER® MH 8510, manufactured by Mitsui Chemicals, Inc.)
- TAFMER A1050S: specific non-acid-modified thermoplastic olefin-based elastomer (TAFMER® A1050S, manufactured by Mitsui Chemicals, Inc.)
- Rubber component: the rubber component was obtained as follows.

Each of the components listed in Table 2 was mixed for 3 minutes at an initial temperature of 40°C in a tightly sealed Banbury Mixer to produce a rubber composition. After making the obtained rubber compositions into a seal by using a roll, pelletization was performed using a rubber pelletizer to obtain rubber pellets.

Table 4

| Composition of Rubber Component | Compounded Amount (Parts by Mass) |
|---|---|
| Br-IPMS (EXXPRO® 3433, manufactured by Exxon Mobile Corporation) | 100 |
| GPF Carbon (trade name: SEAST V, manufactured by Tokai Carbon Co., Ltd.) | 60 |
| Paraffin Oil | 10 |
| Stearic Acid | 2 |
| Zinc Stearate | 1 |
| Zinc Oxide | 5 |

Note that the acid values of the specific acid-modified thermoplastic olefin-based elastomers were calculated according to Calculation formula (1).

For the specific acid-modified thermoplastic olefin-based elastomers and the specific non-acid-modified thermoplastic olefin-based elastomers, similarly to the specific covering mixture, dumbbell-shaped test samples of the specific acid-modified thermoplastic olefin-based elastomers and the specific non-acid-modified thermoplastic olefin-based elastomers were measured using a SHIMADZU AUTOGRAPH AGS-J (load: 5 KN) with setting an elongation rate to 200 mm/min, and each was found to have a tensile elastic modulus of less than 140 MPa.

For the test samples formed from each of the covering mixture of Examples 1-1 to 1-4, 2-1 to 2-5, and 3-1 to 3-9, each was observed by inspecting images captured with an SEM to have an sea-island structure with a sea phase of thermoplastic resin and an island phase of elastomer.

As can be seen from the results in Table 1, the covering mixture of the Examples had higher pull-out resistance than that of the Comparative Examples, and also had excellent adhesiveness to the thermoplastic elastomer (thermoplastic polyamide-based elastomer) forming the tire frame. Therefore tires obtained by covering wires employing the covering mixtures of the Examples, and using these as a protection belt provided to the tire frame employing a resin

material had excellent adhesion durability between the protected metal cord member (wire) and the tire frame. Upon performing actual running test on tires formed using the materials of the Examples and Comparative Examples, the result was that, similarly to above, the tires using the materials of the Examples had excellent adhesion durability.

Exemplary embodiments of the invention is described below, but the scope of the invention is not limited thereto.

<1-1> A tire comprising:

a circular tire frame formed from a resin material; and
a metal reinforcing cord member wound on an outer circumference of the tire frame, at least a portion of the metal reinforcing cord member being covered by a covering mixture comprising a thermoplastic resin and a thermoplastic polyurethane-based elastomer, wherein a tensile elastic modulus (x1) of the tire frame, a tensile elastic modulus (x2) of the covering mixture, and a tensile elastic modulus (x3) of the metal reinforcing cord member satisfy the relationship x1 < x2 < x3.

<1-2> The tire of <1-1>, wherein the covering mixture has a sea-island structure including a sea phase comprising the thermoplastic resin and an island phase comprising the thermoplastic polyurethane-based elastomer.
<1-3> The tire of <1-1> or <1-2>, wherein a mass ratio (p/e) of the thermoplastic resin (p) and the thermoplastic polyurethane-based elastomer (e) in the covering mixture is from 95/5 to 55/45.
<1-4> The tire of any one of <1-1> to <1-3>, wherein an elongation at breakage (y1) of the tire frame, an elongation at breakage (y2) of the covering mixture, and an elongation at breakage (y3) of the metal reinforcing cord member satisfy the relationship y1 > y2 > y3.
<1-5> The tire of any one of <1-1> to <1-4>, wherein the resin material forming the tire frame and the thermoplastic resin included in the covering mixture are the same type of resin as each other.
<1-6> The tire of any one of <1-1> to <1-5>, wherein the thermoplastic resin included in the covering mixture is a thermoplastic polyamide-based resin.
<1-7> The tire of any one of <1-1> to <1-6>, wherein the resin material forming the tire frame comprises a thermoplastic polyamide-based elastomer.

<2-1> A tire comprising:

a circular tire frame formed from a resin material; and
a metal reinforcing cord member wound on an outer circumference of the tire frame, at least a portion of the metal reinforcing cord member being covered by a covering mixture comprising a thermoplastic resin and a thermoplastic polystyrene-based elastomer, wherein a tensile elastic modulus (x1) of the tire frame, a tensile elastic modulus (x2) of the covering mixture, and a tensile elastic modulus (x3) of the metal reinforcing cord member satisfy the relationship x1 < x2 < x3.

<2-2> The tire of <2-1>, wherein the covering mixture has a sea-island structure including a sea phase comprising the thermoplastic resin and an island phase comprising the thermoplastic polystyrene-based elastomer.
<2-3> The tire of <2-1> or <2-2>, wherein a mass ratio (p/e) of the thermoplastic resin (p) and the thermoplastic polystyrene-based elastomer (e) in the covering mixture is from 95/5 to 55/45.
<2-4> The tire of any one of <2-1> to <2-3>, wherein an elongation at breakage (y1) of the tire frame, an elongation at breakage (y2) of the covering mixture, and an elongation at breakage (y3) of the metal reinforcing cord member satisfy the relationship y1 > y2 > y3.
<2-5> The tire of any one of <2-1> to <2-4>, wherein the resin material forming the tire frame and the thermoplastic resin included in the covering mixture are the same type of resin as each other.
<2-6> The tire of any one of <2-1> to <2-5>, wherein the thermoplastic polystyrene-based elastomer is an acid-modified thermoplastic polystyrene-based elastomer, a non-modified thermoplastic polystyrene-based elastomer, or a combination of an acid-modified thermoplastic polystyrene-based elastomer and a non-modified thermoplastic polystyrene-based elastomer.
<2-7> The tire of any one of <2-1> to <2-6>, wherein the thermoplastic resin included in the covering mixture is a thermoplastic polyamide-based resin.
<2-8> The tire of any one of <2-1> to <2-7>, wherein the resin material forming the tire frame comprises a thermoplastic polyamide-based elastomer.

<3-1> A tire comprising:

a circular tire frame formed from a resin material; and
a metal reinforcing cord member wound on an outer circumference of the tire frame, wherein
at least a portion of the metal reinforcing cord member is covered by a covering mixture comprising a thermoplastic resin and at least one thermoplastic olefin-based elastomer selected from the group consisting of an acid-modified thermoplastic olefin-based elastomer having an elastic modulus of less than 140 MPa and a non-acid-modified thermoplastic olefin-based elastomer having an elastic modulus of less than 140 MPa, wherein a tensile elastic modulus (x1) of the tire frame, a tensile elastic modulus (x2) of the covering mixture, and a tensile elastic modulus (x3) of the metal reinforcing cord member satisfy the relationship x1 < x2 < x3.

<3-2> The tire of <3-1>, wherein the covering mixture has a sea-island structure including a sea phase comprising the thermoplastic resin and an island phase comprising the thermoplastic olefin-based elastomer.
<3-3> The tire of <3-1> or <3-2>, wherein a mass ratio (p/e) of the thermoplastic resin (p) and the thermoplastic olefin-based elastomer (e) in the covering mixture is from 95/5 to 55/45.
<3-4> The tire of any one of <3-1> to <3-3>, wherein an elongation at breakage (y1) of the tire frame, an elongation at breakage (y2) of the covering mixture, and an elongation at breakage (y3) of the metal reinforcing cord member satisfy the relationship y3 < y2 < y1.
<3-5> The tire of any one of <3-1> to <3-4>, wherein the resin material forming the tire frame and the thermoplastic resin included in the covering mixture are the same type of resin as each other.
<3-6> The tire of any one of <3-1> to <3-5>, wherein an acid value of the acid-modified thermoplastic olefin-based elastomer is 0.1 mg ($CH_3ONa$)/g or greater, but less than 20.0 mg ($CH_3ONa$)/g.
<3-7> The tire of any one of <3-1> to <3-6>, wherein the thermoplastic resin included in the covering mixture is a thermoplastic polyamide-based resin.
<3-8> The tire of any one of <3-1> to <3-7>, wherein the resin material forming the tire frame comprises a thermoplastic polyamide-based elastomer.

## Claims

**1.** A tire comprising:

a circular tire frame formed from a resin material; and
a metal reinforcing cord member wound on an outer circumference of the tire frame, at least a portion of the metal reinforcing cord member being covered by a covering mixture comprising a thermoplastic resin and a thermoplastic polyurethane-based elastomer,
wherein a tensile elastic modulus (x1) of the tire frame, a tensile elastic modulus (x2) of the covering mixture, and a tensile elastic modulus (x3) of the metal reinforcing cord member satisfy the relationship x1 < x2 < x3.

**2.** The tire of claim 1, wherein the covering mixture has a sea-island structure including a sea phase comprising the thermoplastic resin and an island phase comprising the thermoplastic polyurethane-based elastomer.

**3.** The tire of claim 1 or claim 2, wherein a mass ratio (p/e) of the thermoplastic resin (p) and the thermoplastic polyurethane-based elastomer (e) in the covering mixture is from 95/5 to 55/45.

**4.** A tire comprising:

a circular tire frame formed from a resin material; and
a metal reinforcing cord member wound on an outer circumference of the tire frame, at least a portion of the metal reinforcing cord member being covered by a covering mixture comprising a thermoplastic resin and a thermoplastic polystyrene-based elastomer,

wherein a tensile elastic modulus (x1) of the tire frame, a tensile elastic modulus (x2) of the covering mixture, and a tensile elastic modulus (x3) of the metal reinforcing cord member satisfy the relationship x1 < x2 < x3.

**5.** The tire of claim 4, wherein the covering mixture has a sea-island structure including a sea phase comprising the thermoplastic resin and an island phase comprising the thermoplastic polystyrene-based elastomer.

6. The tire of claim 4 or claim 5, wherein a mass ratio (p/e) of the thermoplastic resin (p) and the thermoplastic polystyrene-based elastomer (e) in the covering mixture is from 95/5 to

7. The tire of any one of claims 4 to 6, wherein the thermoplastic polystyrene-based elastomer is an acid-modified thermoplastic polystyrene-based elastomer, a non-modified thermoplastic polystyrene-based elastomer, or a combination of an acid-modified thermoplastic polystyrene-based elastomer and a non-modified thermoplastic polystyrene-based elastomer.

8. A tire comprising:

a circular tire frame formed from a resin material; and
a metal reinforcing cord member wound on an outer circumference of the tire frame, wherein
at least a portion of the metal reinforcing cord member is covered by a covering mixture comprising a thermoplastic resin and at least one thermoplastic olefin-based elastomer selected from the group consisting of an acid-modified thermoplastic olefin-based elastomer having an elastic modulus of less than 140 MPa and a non-acid-modified thermoplastic olefin-based elastomer having an elastic modulus of less than 140 MPa,
wherein a tensile elastic modulus (x1) of the tire frame, a tensile elastic modulus (x2) of the covering mixture, and a tensile elastic modulus (x3) of the metal reinforcing cord member satisfy the relationship $x1 < x2 < x3$.

9. The tire of claim 8, wherein the covering mixture has a sea-island structure including a sea phase comprising the thermoplastic resin and an island phase comprising the thermoplastic olefin-based elastomer.

10. The tire of claim 8 or claim 9, wherein a mass ratio (p/e) of the thermoplastic resin (p) and the thermoplastic olefin-based elastomer (e) in the covering mixture is from 95/5 to 55/45.

11. The tire of any one of claims 8 to 10, wherein an acid value of the acid-modified thermoplastic olefin-based elastomer is 0.1 mg ($CH_3ONa$)/g or greater, but less than 20.0 mg ($CH_3ONa$)/g.

12. The tire of any one of claims 1 to 11, wherein an elongation at breakage (y1) of the tire frame, an elongation at breakage (y2) of the covering mixture, and an elongation at breakage (y3) of the metal reinforcing cord member satisfy the relationship $y3 < y2 < y1$.

13. The tire of any one of claims 1 to 12, wherein the resin material forming the tire frame and the thermoplastic resin included in the covering mixture are the same type of resin as each other.

14. The tire of any one of claims 1 to 13, wherein the thermoplastic resin included in the covering mixture is a thermoplastic polyamide-based resin.

15. The tire of any one of claims 1 to 14, wherein the resin material forming the tire frame comprises a thermoplastic polyamide-based elastomer.

**Patentansprüche**

1. Reifen, umfassend:

einen kreisförmigen Reifenrahmen, der aus einem Harzmaterial gebildet ist; und
ein Metallverstärkungscordelement, das auf einen Außenumfang des Reifenrahmens gewickelt ist, wobei mindestens ein Abschnitt des Metallverstärkungscordelements durch eine Abdeckmischung bedeckt ist, die ein thermoplastisches Harz und ein thermoplastisches, polyurethanbasiertes Elastomer umfasst,
wobei ein Zugelastizitätsmodul (x1) des Reifenrahmens, ein Zugelastizitätsmodul (x2) der Abdeckmischung und ein Zugelastizitätsmodul (x3) des Metallverstärkungscordelements die Beziehung $x1 < x2 < x3$ erfüllen.

2. Reifen nach Anspruch 1, wobei die Abdeckmischung eine Meer-Insel-Struktur hat, die eine Meeresphase, die das thermoplastische Harz umfasst, und eine Inselphase, die das thermoplastische, polyurethanbasierte Elastomer umfasst, einschließt.

3. Reifen nach Anspruch 1 oder Anspruch 2, wobei ein Massenverhältnis (p/e) des thermoplastischen Harzes (p) und

des thermoplastischen, polyurethanbasierten Elastomers (e) in der Abdeckmischung von 95/5 bis 55/45 beträgt.

**4.** Reifen, umfassend:

einen kreisförmigen Reifenrahmen, der aus einem Harzmaterial gebildet ist; und
ein Metallverstärkungscordelement, das auf einen Außenumfang des Reifenrahmens gewickelt ist, wobei mindestens ein Abschnitt des Metallverstärkungscordelements durch eine Abdeckmischung bedeckt ist, die ein thermoplastisches Harz und ein thermoplastisches, polystyrolbasiertes Elastomer umfasst, wobei ein Zugelastizitätsmodul (x1) des Reifenrahmens, ein Zugelastizitätsmodul (x2) der Abdeckmischung und ein Zugelastizitätsmodul (x3) des Metallverstärkungscordelements die Beziehung x1 < x2 < x3 erfüllen.

**5.** Reifen nach Anspruch 4, wobei die Abdeckmischung eine Meer-Insel-Struktur hat, die eine Meeresphase, die das thermoplastische Harz umfasst, und eine Inselphase, die das thermoplastische, polystyrolbasierte Elastomer umfasst, einschließt.

**6.** Reifen nach Anspruch 4 oder Anspruch 5, wobei ein Massenverhältnis (p/e) des thermoplastischen Harzes (p) und des thermoplastischen, polystyrolbasierten Elastomers (e) in der Abdeckmischung von 95/5 bis 55/45 beträgt.

**7.** Reifen nach einem der Ansprüche 4 bis 6, wobei das thermoplastische, polystyrolbasierte Elastomer ein säuremodifiziertes, thermoplastisches, polystyrolbasiertes Elastomer, ein nicht modifiziertes, thermoplastisches, polystyrolbasiertes Elastomer oder eine Kombination aus einem säuremodifizierten, thermoplastischen, polystyrolbasierten Elastomer und einem nicht modifizierten, thermoplastischen, polystyrolbasierten Elastomers ist.

**8.** Reifen, umfassend:

einen kreisförmigen Reifenrahmen, der aus einem Harzmaterial gebildet ist; und
ein Metallverstärkungscordelement, das auf einen Außenumfang des Reifenrahmens gewickelt ist,
wobei
mindestens ein Abschnitt des Metallverstärkungscordelements durch eine Abdeckmischung bedeckt ist, die ein thermoplastisches Harz und mindestens ein thermoplastisches olefinbasiertes Elastomer umfasst, ausgewählt aus der Gruppe, bestehend aus einem säuremodifizierten, thermoplastischen, olefinbasierten Elastomer mit einem Elastizitätsmodul von weniger als 140 MPa und einem nicht säuremodifizierten, thermoplastischen, olefinbasierten Elastomer mit einem Elastizitätsmodul von weniger als 140 MPa,
wobei ein Zugelastizitätsmodul (x1) des Reifenrahmens, ein Zugelastizitätsmodul (x2) der Abdeckmischung und ein Zugelastizitätsmodul (x3) des Metallverstärkungscordelements die Beziehung x1 < x2 < x3 erfüllen.

**9.** Reifen nach Anspruch 8, wobei die Abdeckmischung eine Meer-Insel-Struktur hat, die eine Meeresphase, die das thermoplastische Harz umfasst, und eine Inselphase, die das thermoplastische, olefinbasierte Elastomer umfasst, einschließt.

**10.** Reifen nach Anspruch 8 oder Anspruch 9, wobei ein Massenverhältnis (p/e) des thermoplastischen Harzes (p) und des thermoplastischen, olefinbasierten Elastomers (e) in der Abdeckmischung von 95/5 bis 55/45 beträgt.

**11.** Reifen nach einem der Ansprüche 8 bis 10, wobei ein Säurewert des säuremodifizierten, thermoplastischen, olefinbasierten Elastomers 0,1 mg ($CH_3ONa$)/g oder mehr, jedoch weniger als 20,0 mg ($CH_3ONa$)/g beträgt.

**12.** Reifen nach einem der Ansprüche 1 bis 11, wobei eine Bruchdehnung (y1) des Reifenrahmens, eine Bruchdehnung (y2) der Abdeckmischung und eine Bruchdehnung (y3) des Metallverstärkungscordelements die Beziehung y3 < y2 < y1 erfüllen.

**13.** Reifen nach einem der Ansprüche 1 bis 12, wobei das Harzmaterial, das den Reifenrahmen bildet, und das thermoplastische Harz, das in der Abdeckmischung enthalten ist, vom selben Harztyp sind.

**14.** Reifen nach einem der Ansprüche 1 bis 13, wobei das in der Abdeckmischung enthaltene thermoplastische Harz ein thermoplastisches, polyamidbasiertes Harz ist.

**15.** Reifen nach einem der Ansprüche 1 bis 14, wobei das den Reifenrahmen bildende Harzmaterial ein thermoplastisches, polyamidbasiertes Elastomer umfasst.

## Revendications

**1.** Pneumatique comprenant :

une armature de pneumatique circulaire formée à partir d'un matériau en résine ; et
un élément de câble de renfort en métal, enroulé sur une circonférence externe de l'armature de pneumatique, au moins une partie de l'élément de câble de renfort en métal étant recouverte par un mélange de recouvrement comprenant une résine thermoplastique et un élastomère thermoplastique à base de polyuréthane,
dans lequel un module d'élasticité en traction (x1) de l'armature de pneumatique, un module d'élasticité en traction (x2) du mélange de recouvrement et un module d'élasticité en traction (x3) de l'élément de câble de renfort en métal satisfont à la relation $x1 < x2 < x3$.

**2.** Pneumatique selon la revendication 1, dans lequel le mélange de recouvrement a une structure mer-île incluant une phase mer comprenant la résine thermoplastique et une phase île comprenant l'élastomère thermoplastique à base de polyuréthane.

**3.** Pneumatique selon la revendication 1 ou la revendication 2, dans lequel un rapport massique (p/e) de la résine thermoplastique (p) et de l'élastomère thermoplastique à base de polyuréthane (e) dans le mélange de recouvrement va de 95/5 à 55/45.

**4.** Pneumatique comprenant :

une armature de pneumatique circulaire formée à partir d'un matériau en résine ; et
un élément de câble de renfort en métal, enroulé sur une circonférence externe de l'armature de pneumatique, au moins une partie de l'élément de câble de renfort en métal étant recouverte par un mélange de recouvrement comprenant une résine thermoplastique et un élastomère thermoplastique à base de polystyrène, dans lequel un module d'élasticité en traction (x1) de l'armature de pneumatique, un module d'élasticité en traction (x2) du mélange de recouvrement et un module d'élasticité en traction (x3) de l'élément de câble de renfort en métal satisfont à la relation $x1 < x2 < x3$.

**5.** Pneumatique selon la revendication 4, dans lequel le mélange de recouvrement a une structure mer-île incluant une phase mer comprenant la résine thermoplastique et une phase île comprenant l'élastomère thermoplastique à base de polystyrène.

**6.** Pneumatique selon la revendication 4 ou la revendication 5, dans lequel un rapport massique (p/e) de la résine thermoplastique (p) et de l'élastomère thermoplastique à base de polystyrène (e) dans le mélange de recouvrement va de 95/5 à 55/45.

**7.** Pneumatique selon l'une quelconque des revendications 4 à 6, dans lequel l'élastomère thermoplastique à base de polystyrène est un élastomère thermoplastique à base de polystyrène à modification acide, un élastomère thermoplastique à base de polystyrène non modifié ou une combinaison d'un élastomère thermoplastique à base de polystyrène à modification acide et d'un élastomère thermoplastique à base de polystyrène non modifié.

**8.** Pneumatique comprenant :

une armature de pneumatique circulaire formée à partir d'un matériau en résine ; et
un élément de câble de renfort en métal, enroulé sur une circonférence externe de l'armature de pneumatique, dans lequel
au moins une partie de l'élément de câble de renfort en métal est recouverte par un mélange de recouvrement comprenant une résine thermoplastique et au moins un élastomère thermoplastique à base d'oléfine choisi dans le groupe constitué d'un élastomère thermoplastique à base d'oléfine à modification acide ayant un module d'élasticité inférieur à 140 MPa et d'un élastomère thermoplastique à base d'oléfine sans modification acide ayant un module d'élasticité inférieur à 140 MPa,
dans lequel un module d'élasticité en traction (x1) de l'armature de pneumatique, un module d'élasticité en traction (x2) du mélange de recouvrement et un module d'élasticité en traction (x3) de l'élément de câble de renfort en métal satisfont à la relation $x1 < x2 < x3$.

**9.** Pneumatique selon la revendication 8, dans lequel le mélange de recouvrement a une structure mer-île incluant

une phase mer comprenant la résine thermoplastique et une phase île comprenant l'élastomère thermoplastique à base d'oléfine.

**10.** Pneumatique selon la revendication 8 ou la revendication 9, dans lequel un rapport massique (p/e) de la résine thermoplastique (p) et de l'élastomère thermoplastique à base d'oléfine (e) dans le mélange de recouvrement va de 95/5 à 55/45.

**11.** Pneumatique selon l'une quelconque des revendications 8 à 10, dans lequel un indice d'acide de l'élastomère thermoplastique à base d'oléfine à modification acide est de 0,1 mg de ($CH_3ONa$)/g ou plus, mais inférieur à 20,0 mg de ($CH_3ONa$)/g.

**12.** Pneumatique selon l'une quelconque des revendications 1 à 11, dans lequel un allongement à la rupture (y1) de l'armature de pneumatique, un allongement à la rupture (y2) du mélange de recouvrement et un allongement à la rupture (y3) de l'élément de câble de renfort en métal satisfont à la relation $y3 < y2 < y1$.

**13.** Pneumatique selon l'une quelconque des revendications 1 à 12, dans lequel le matériau en résine formant l'armature de pneumatique et la résine thermoplastique incluse dans le mélange de recouvrement sont l'un et l'autre du même type de résine.

**14.** Pneumatique selon l'une quelconque des revendications 1 à 13, dans lequel la résine thermoplastique incluse dans le mélange de recouvrement est une résine thermoplastique à base de polyamide.

**15.** Pneumatique selon l'une quelconque des revendications 1 à 14, dans lequel le matériau en résine formant l'armature de pneumatique comprend un élastomère thermoplastique à base de polyamide.

[図1A]

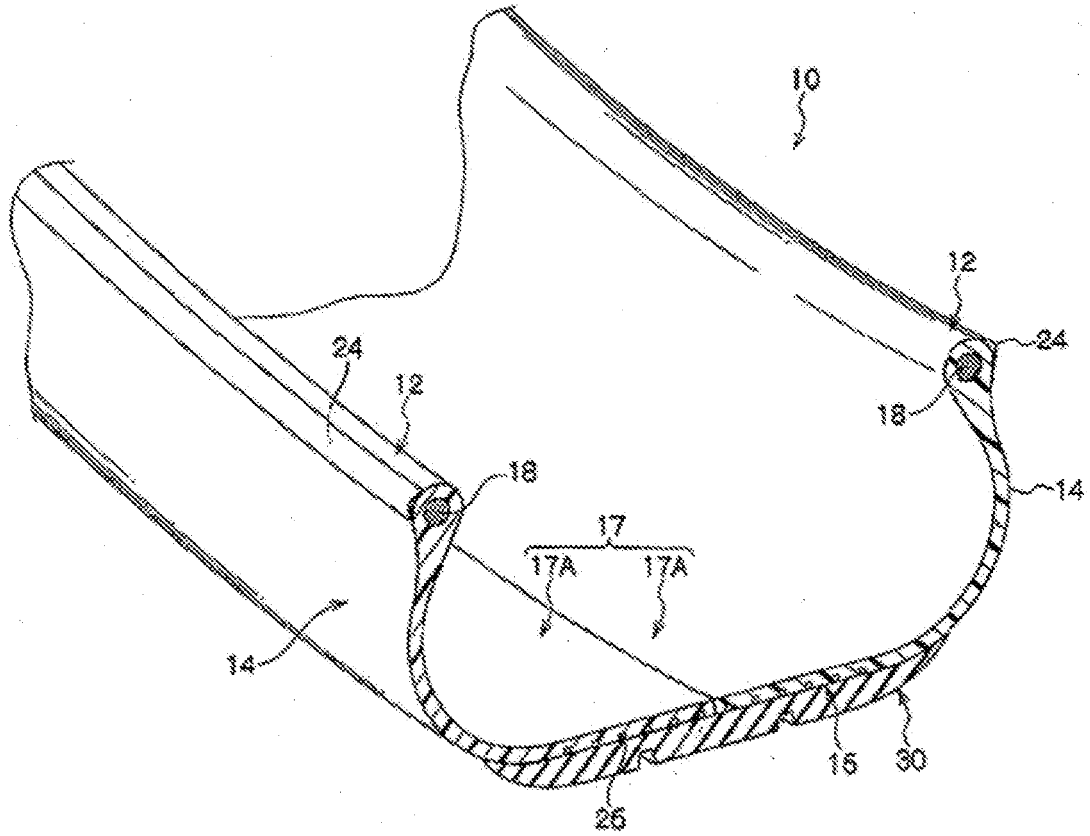


[図1B]

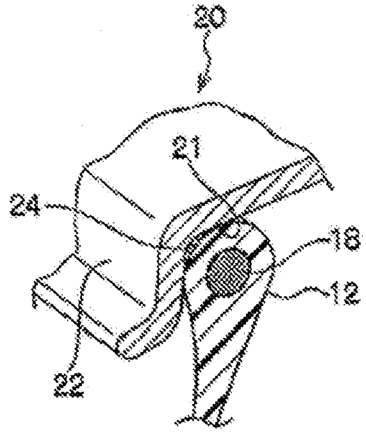

[図2]

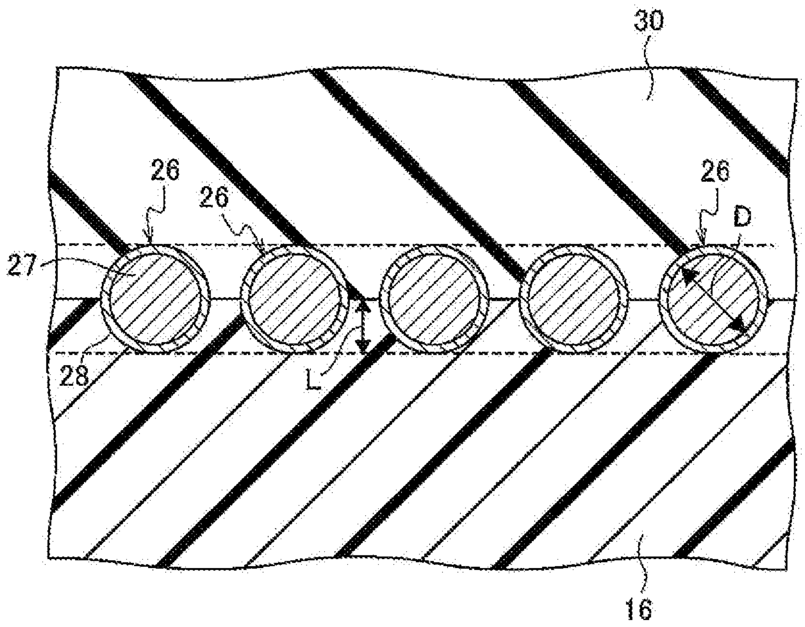

［図3］

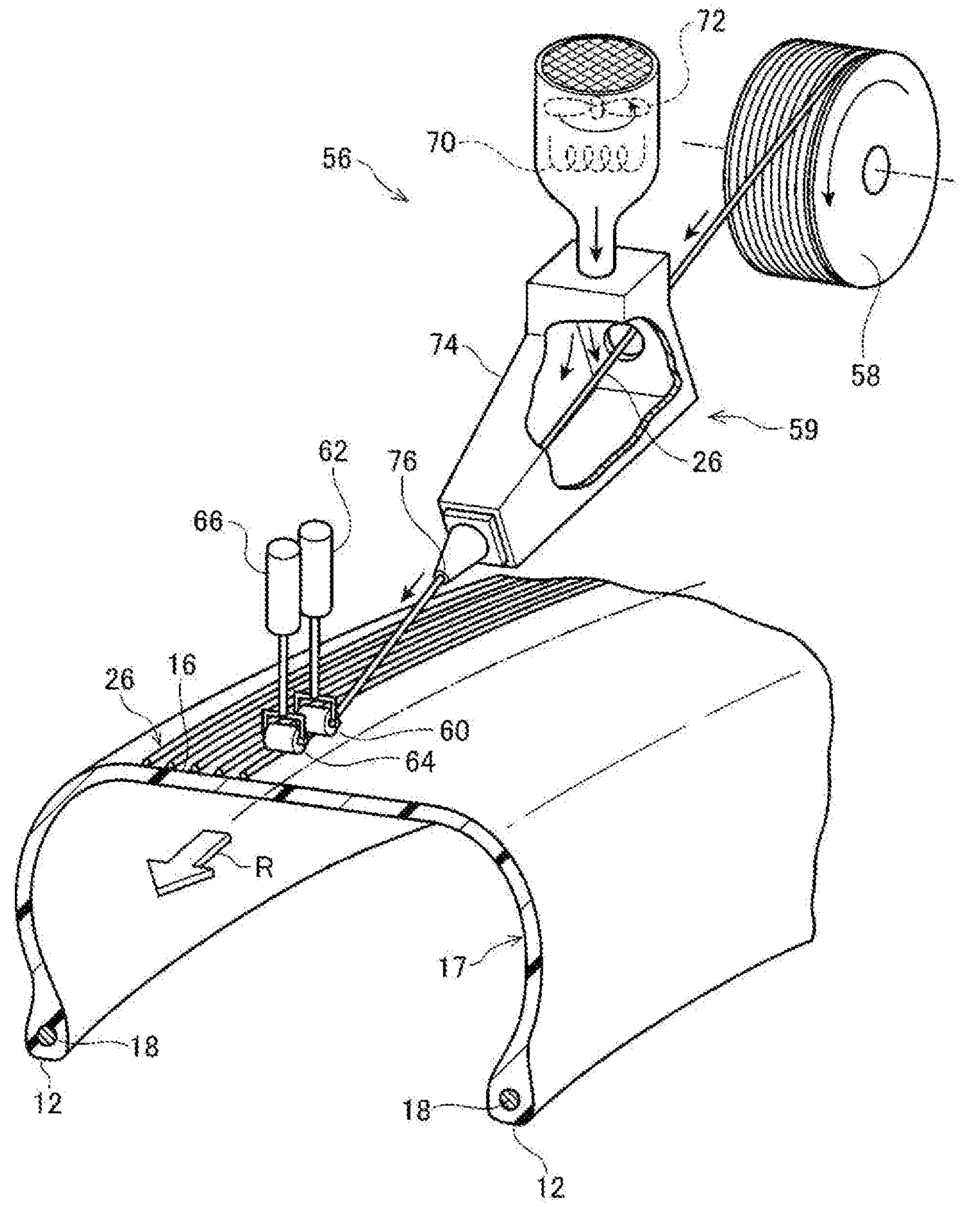

[図4]

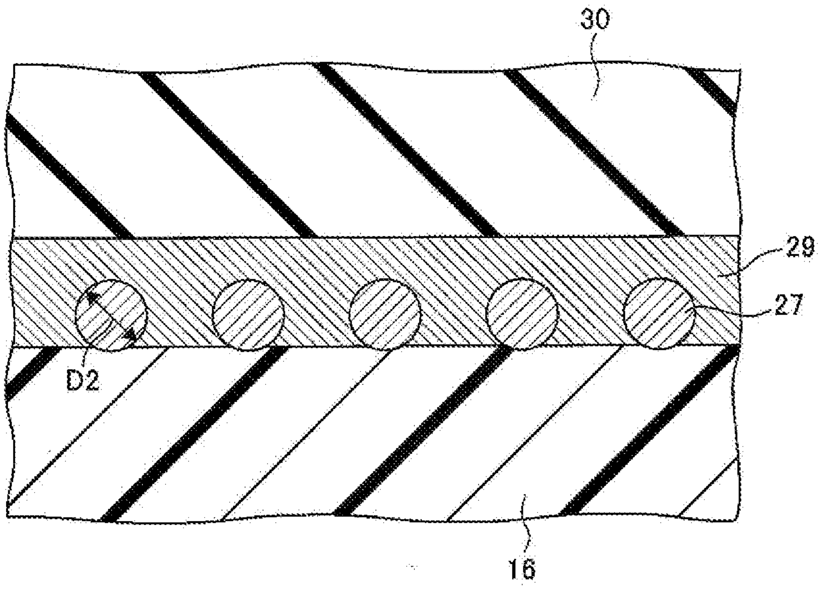

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003104008 A
- JP H03143701 A
- JP 4423772 B
- JP 4465916 B
- JP 2012035500 A
- JP H05331256 A
- JP 2004346273 A